Europäisches Patentamt

European Patent Office

Office européen des brevets

(11) Publication number : **0 475 626 A2**

# (12) EUROPEAN PATENT APPLICATION

(21) Application number : 91307836.6

(22) Date of filing : 28.08.91

(51) Int. Cl.⁵ : **G11B 11/03**

(30) Priority : **28.08.90 JP 225700/90**

(43) Date of publication of application :
**18.03.92 Bulletin 92/12**

(84) Designated Contracting States :
**DE FR GB IT**

(71) Applicant : **NIKON CORPORATION**
**2-3, Marunouchi 3-chome Chiyoda-ku**
**Tokyo (JP)**

(72) Inventor : **Matsumoto, Hiroyuki**
**15-6, Futaba 4-chome**
**Shinagawa-ku, Tokyo (JP)**

(74) Representative : **Burke, Steven David et al**
**R.G.C. Jenkins & Co. 26 Caxton Street**
**London SW1H 0RJ (GB)**

(54) **Overwrite-capable magnetooptical recording medium allowing enlarged margin of laser power.**

(57)    A medium comprises a first layer consisting of perpendicularly magnetizable magnetic film functioning as a recording layer and a second layer consisting of perpendicularly magnetizable magnetic film
functioning as a reference layer, wherein the first layer and the second layer are exchange-coupled, and
a direction of magnetization of the second layer can be aligned in a predetermined direction without
changing a direction of magnetization of the first layer. The medium also comprises a thermal diffusion
layer adjacent to the second layer. The thermal diffusion layer allows enlarged margin of laser power.

## FIG. 1A

LASER BEAM

EP 0 475 626 A2

## BACKGROUND OF THE INVENTION

### Field of the Invention

The present invention relates to a magnetooptical recording medium capable of performing an overwrite operation by modulating only an intensity of a light beam in accordance with information to be recorded without modulating a direction and strength of a bias field Hb.

### Related Background Art

In recent years, many efforts have been made to develop an optical recording/reproduction method which can satisfy various requirements including high density, large capacity, high access speed, and high recording/reproduction speed, and a recording apparatus, a reproduction apparatus, and a recording medium used therefor.

Of various optical recording/reproduction methods, the magnetooptical recording/reproduction method is most attractive due to its unique advantages in that information can be erased after it is recorded, and new information can be repetitively recorded.

A recording medium used in the magnetooptical recording/reproduction method has a perpendicular magnetic layer or layers as a recording layer. The magnetic layer comprises, for example, amorphous GdFe or GdCo, GdFeCo, TbFe, TbCo, TbFeCo, and the like. Concentrical or spiral tracks are normally formed on the recording layer, and information is recorded on the tracks. In this specification, one of "upward" and "downward" directions of magnetization with respect to a film surface is defined as an "A direction", and the other one is defined as a "non-A direction". Information to be recorded is binary-coded in advance, and is recorded by two signals, i.e., a bit ($B_1$) having an "A-directed" magnetization, and a bit ($B_0$) having a "non-A-directed" magnetization. These bits $B_1$ and $B_0$ correspond to "1" and "0" levels of a digital signal. However, in general, the direction of magnetization of the recording tracks can be aligned in the "non-A direction" by applying a strong bias field before recording. This processing is called "initialize*" in a conventional sense. Thereafter, a bit ($B_1$) having an "A-directed" magnetization is formed on the tracks. Information is recorded in accordance with the presence/absence and/or a bit length of the bit ($B_1$). Note that a bit is called a mark recently.

### Principle of Bit Formation:

In the bit formation, a characteristic feature of laser, i.e., excellent coherence in space and time, is effectively used to focus a beam into a spot as small as the diffraction limit determined by the wavelength of the laser light. The focused light is irradiated onto the track surface to record information by producing bits less than 1 μm in diameter on the recording layer. In the optical recording, a recording density up to $10^8$ bits/cm$^2$ can be theoretically attained, since a laser beam can be concentrated into a spot with a size as small as its wavelength.

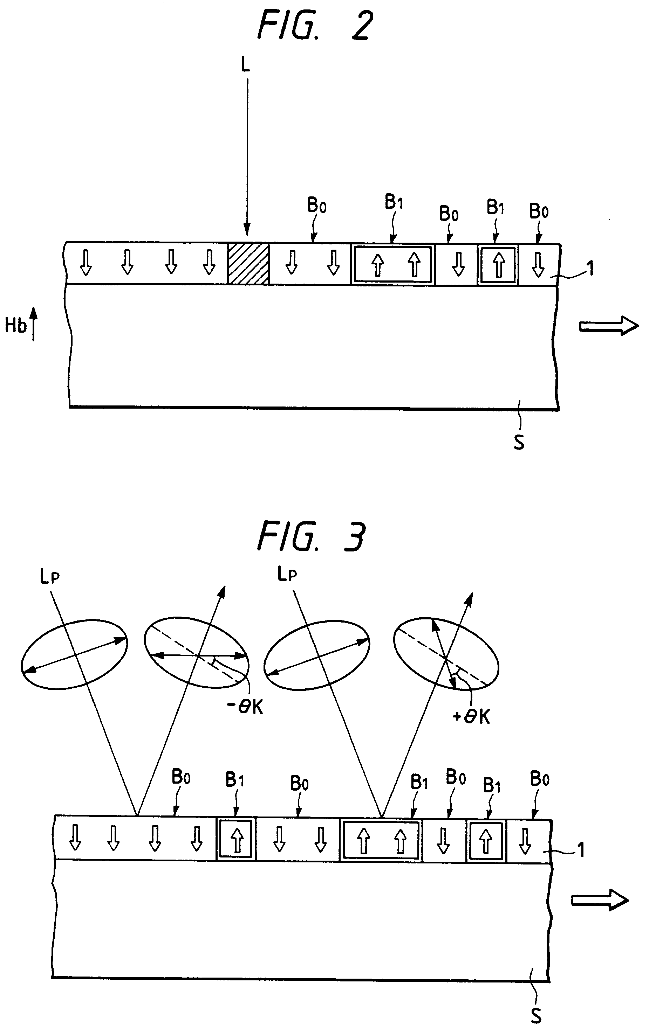

As shown in Fig. 2, in the magnetooptical recording, a laser beam (L) is focused onto a recording layer (1) to heat it, while a bias field (Hb) is externally applied to the heated portion in the direction opposite to the initialized* direction. A coercivity $H_C$ of the locally heated portion is decreased below the bias field (Hb). As a result, the direction of magnetization of that portion is aligned in the direction of the bias field (Hb). In this way, reversely magnetized bits are formed.

Ferromagnetic and ferrimagnetic materials differ in the temperature dependencies of the magnetization and $H_C$. Ferromagnetic materials have $H_C$ which decreases around the Curie temperature and allow information recording based on this phenomenon. Thus, information recording in ferromagnetic materials is referred to as $T_C$ recording (Curie temperature recording).

On the other hand, ferrimagnetic materials have a compensation temperature, below the Curie temperature, at which magnetization (M) becomes zero. The $H_C$ abruptly increases around this temperature and hence abruptly decreases outside this temperature. The decreased $H_C$ is canceled by a relatively weak bias field (Hb). Namely, recording is enabled. This process is called $T_{comp.}$ recording (compensation point recording).

In this case, however, there is no need to adhere to the Curie point or temperatures thereabouts, and the compensation temperature. In other words, if a bias field (Hb) capable of canceling a decreased $H_C$ is applied to a magnetic material having the decreased $H_C$ at a predetermined temperature higher than a room temperature, recording is enabled.

2

Principle of Reproduction:

Fig. 3 shows the principle of information reproduction based on the magnetooptical effect. Light is an electromagnetic wave with an electromagnetic-field vector normally emanating in all directions in a plane perpendicular to the light path. When light is converted to linearly polarized beams ($L_P$) and irradiated onto a recording layer (1), it is reflected by its surface or passes through the recording layer (1). At this time, the plane of polarization rotates according to the direction of magnetization (M). This phenomenon is called the magnetic Kerr effect or magnetic Faraday effect.

For example, if the plane of polarization of the reflected light rotates through $\theta_k$ degrees for the "A-directed" magnetization, it rotates through $-\theta_k$ degrees for the "non-A-directed" magnetization. Therefore, when the axis of an optical analyzer (polarizer) is set perpendicular to the plane inclined at $-\theta_k$, the light reflected by a "non-A-direction" magnetized bit ($B_0$) cannot pass through the analyzer. On the contrary, a component corresponding to a product of $(\sin 2\theta_k)^2$ and the light reflected by a bit ($B_1$) magnetized along the "A direction" passes through the analyzer and becomes incident on a detector (photoelectric conversion means). As a result, the bit ($B_1$) magnetized along the "A direction" looks brighter than the bit ($B_0$) magnetized along the "non-A direction", and the detector produces a stronger electrical signal for the bit ($B_1$). The electrical signal from the detector is modulated in accordance with the recorded information, thus reproducing the information.

In order to re-use a recorded medium, (i) the medium must be re-initialized* by an initialize* device, or (ii) an erase head having the same arrangement as a recording head must be added to a recording apparatus, or (iii) as preliminary processing, recorded information must be erased using a recording apparatus or an erasing apparatus.

Therefore, in the conventional magnetooptical recording method, it is impossible to perform an overwrite operation, which can properly record new information regardless of the presence/absence of recorded information.

If the direction of a bias field Hb can be desirably modulated between the "A-direction" and "non-A direction", an overwrite operation is possible. However, it is impossible to modulate the direction of the bias field Hb at high speed. For example, if the bias field Hb comprises a permanent magnet, the direction of the magnet must be mechanically reversed. However, it is impossible to reverse the direction of the magnet at high speed. Even when the bias field Hb comprises an electromagnet, it is also impossible to modulate the direction of a large-capacity current at high speed.

However, according to remarkable technical developments, a magnetooptical recording method capable of performing an overwrite operation by modulating only an intensity of a light beam to be irradiated in accordance with binary coded information to be recorded without modulating a strength (including an ON/OFF state) or the direction of the bias field Hb, an overwrite-capable magnetooptical recording medium used in this method, and an overwrite-capable recording apparatus used in this method were invented and filed as a patent application (Japanese Patent Laid-Open Application No. 62-175948 corresponding to U.S. Ser. No. 870350, DE 3,619,618). This invention will be quoted as the basic invention hereinafter.

[Description of the Basic Invention]

The basic invention uses a "multilayered magnetooptical recording medium which includes a recording layer (first layer) which comprises a perpendicular magnetizable magnetic thin film, and a reference layer (second layer) which comprises a perpendicular magnetizable magnetic thin film, and in which the two layers are exchange-coupled, and the direction of magnetization of only the second layer can be aligned in a predetermined direction without changing the direction of magnetization of the first layer at a room temperature". Information is recorded in the first layer (in some cases, also in the second layer) by a bit having an "A-directed" magnetization, and a bit having a "non-A-directed" magnetization.

In this medium, the direction of magnetization of the second layer can be aligned in an "A direction" by an external means (e.g., an initial field Hini. or an exchange coupling force from a third layer), and at this time, the direction of magnetization of the first layer is not reversed. Furthermore, the direction of magnetization of the second layer which has been aligned in the "A direction" is not reversed upon application of an exchange coupling force from the first layer. In contrast to this, the direction of magnetization of the first layer is not reversed upon application of an exchange coupling force from the second layer aligned in the "A direction".

The second layer has a lower coercivity $H_C$ and a higher Curie temperature $T_C$ than those of the first layer.

According to a recording method of the basic invention, the direction of magnetization of the second layer of the recording medium is aligned in the "A direction" by an external means. This process will be specially referred to as "initialization" in this specification.

Thereafter, a laser beam which is pulse-modulated in accordance with binary coded information is irradiated on the medium. The laser beam intensity has high and low levels. These high and low levels correspond to high and low levels of a pulse. Note that low level is higher than very low level* to be irradiated on the medium in a reproduction mode.

A bias field Hb whose direction and strength are not modulated or an exchange coupling force from a fourth layer is applied to a medium portion irradiated with the beam. The bias field Hb cannot be focused to a size as small as the portion irradiated with the beam (spot region), and a region where the bias field Hb is applied is considerably larger than the spot region.

When a low-level beam is irradiated, a bit in which the direction of magnetization of the first layer is one of the "A direction" and the "non-A direction" is formed regardless of the direction of magnetization of a previous bit.

When a high-level beam is irradiated, a bit in which the direction of magnetization of the first layer is the other direction is formed regardless of the direction of magnetization of the previous bit.

Thus, the overwrite operation is completed.

In the basic invention, a laser beam is pulse-modulated according to information to be recorded. However, this procedure itself has been performed in the conventional magnetooptical recording method, and a means for pulse-modulating the beam intensity on the basis of binary coded information to be recorded is a known means. For example, see "THE BELL SYSTEM TECHNICAL JOURNAL, Vol. 62 (1983), pp. 1923 - 1936 for further details. Therefore, the modulating means is available by partially modifying the conventional beam modulating means if required high and low levels of the beam intensity are given. Such a modification would be easy for those who are skilled in the art if high and low levels of the beam intensity are given.

One characteristic feature of the basic invention lies in high and low levels of the beam intensity. More specifically, when the beam intensity is at high level, "A-directed" magnetization of a reference layer (second layer) is reversed to the "non-A direction" by an external means such as a bias field (Hb) and the like, and a bit having the "non-A-directed" [or "A-directed"] magnetization is thus formed in a recording layer (first layer) by means of the "non-A-directed" magnetization of the second layer. When the beam intensity is at low level, a bit having the "A-directed" [or "non-A-directed"] magnetization is formed in the first layer by means of the "A-directed" magnetization of the second layer.

In this specification, if expressions ooo [or $\triangle\triangle\triangle$] appear, ooo outside the parentheses in the first expression corresponds to ooo in the subsequent expressions ooo [or $\triangle\triangle\triangle$], and vice versa.

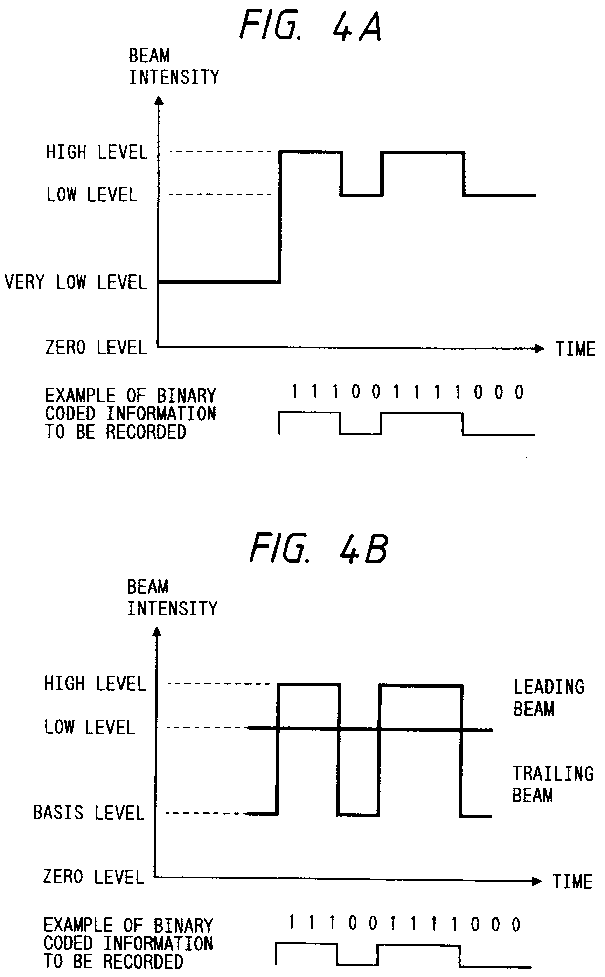

As is well known, even if recording is not performed, a laser beam is often turned on at very low level* in order to, for example, access a predetermined recording position on the medium. When the laser beam is also used for reproduction, the laser beam is often turned on at an intensity of the very low level*. In this invention, the intensity of the laser beam may be set at this very low level*. However, low level for forming a bit is higher than the very low level*. Therefore, the output waveform of the laser beam of the basic invention is as shown in Fig. 4A.

Although not described in the specification of the basic invention, a recording beam need not always be a single beam but may be two proximity beams in the basic invention. More specifically, a leading beam may be used as a low-level laser beam (erasing beam) which is not modulated in principle, and a trailing beam may be used as a high-level laser beam (writing beam) which is modulated in accordance with information. In this case, the trailing beam is pulse-modulated between high level and base level (equal to or lower than low level, and its output may be zero). In this case, an output waveform is as shown in Fig. 4B.

A medium used in the basic invention is roughly classified into first and second categories. In either category, a recording medium has a multilayered structure including a recording layer (first layer) and a reference layer (second layer).

The first layer is the recording layer, which exhibits a high coercivity at a room temperature, and has a low magnetization reversing temperature. The second layer is the reference layer, which exhibits a relatively lower coercivity at a room temperature and has a higher magnetization reversing temperature than those of the first layer. Note that each of the first and second layers may comprise a multilayered structure. If necessary, a third layer (e.g., an adjusting layer for an exchange coupling force $\sigma_w$) may be interposed between the first and second layers. In addition, a clear boundary between the first and second layers need not be formed, and one layer can be gradually converted into the other layer.

In the first category, when the coercivity of the recording layer (first layer) is represented by $H_{C1}$; that of the reference layer (second layer), $H_{C2}$; a Curie temperature of the first layer, $T_{C1}$; that of the second layer, $T_{C2}$; a room temperature, $T_R$; a temperature of the recording medium obtained when a low-level laser beam is irradiated, $T_L$; that obtained when a high-level laser beam is irradiated, $T_H$; a coupling field applied to the first layer, $H_{D1}$; and a coupling field applied to the second layer, $H_{D2}$, the recording medium satisfies Formula 1 below, and satisfies Formulas 2 to 5 at the room temperature:

$$T_R < T_{C1} \approx T_L < T_{C2} \approx T_H \quad \text{Formula 1}$$

$$H_{C1} > H_{C2} + \left| H_{D1} \mp H_{D2} \right| \quad \text{Formula} \quad 2$$
$$H_{C1} > H_{D1} \quad \text{Formula} \quad 3$$
$$H_{C2} > H_{D2} \quad \text{Formula} \quad 4$$
$$H_{C2} + H_{D2} < \left| Hini. \right| < H_{C1} \pm H_{D1} \quad \text{Formula} \quad 5$$

In the above formulas, symbol "≈" means "equal to" or "substantially equal to (±20°C)". In addition, of double signs ± and ∓, the upper sign corresponds to an A (antiparallel) type medium, and the lower sign corresponds to a P (parallel) type medium (these media will be described later). Note that a ferromagnetic medium belongs to a P type.

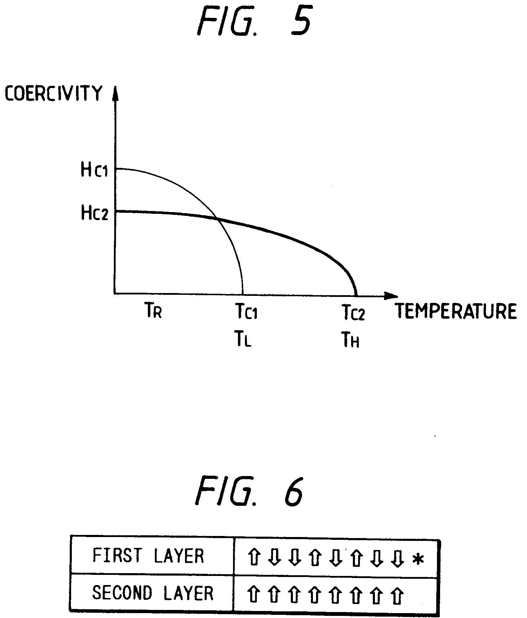

The relationship between a coercivity and a temperature is as shown in the graph of Fig. 5. In Fig. 5, a thin curve represents the characteristics of the first layer, and a bold curve represents those of the second layer.

Therefore, when an external means, e.g., an initial field (Hini.) is applied to this recording medium at the room temperature, the direction of magnetization of only the reference layer (second layer) is reversed without reversing that of the recording layer (first layer) according to Formula 5. When the initial field (Hini.) is applied to the medium before recording, only the second layer can be magnetized in the "A direction" (in the drawings, the "A direction" is indicated by an upward arrow ⇑, and the "non-A direction" is indicated by a downward arrow

⇓ for the sake of simplicity). If the initial field Hini. becomes zero, the direction of magnetization ⇑ of the second layer can be left unchanged without being re-reversed according to Formula 4.

Fig. 6 schematically shows a state wherein only the second layer is magnetized by the external means in the "A direction" ⇑ until a time immediately before recording.

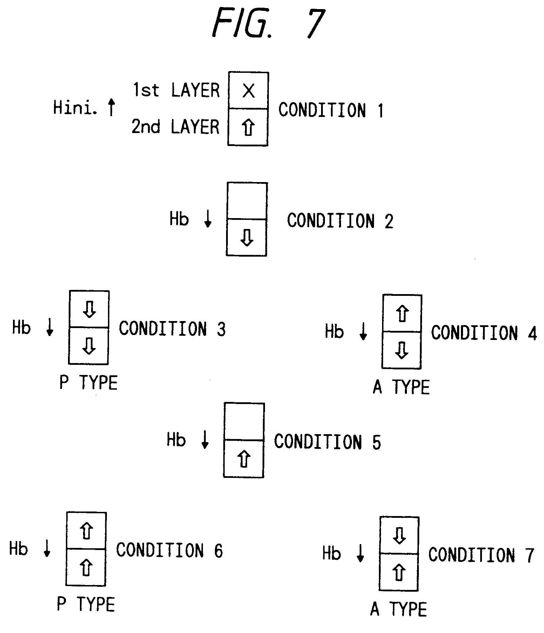

In Fig. 6, the direction of magnetization* in the first layer represents previously recorded information. In the following description, since the direction of magnetization of the first layer can be disregarded, it is simply indicated by X, as shown in CONDITION 1 in Fig. 6 or 7.

In CONDITION 1, a high-level laser beam is irradiated on the medium to increase a medium temperature to $T_H$. Since $T_H$ is higher than the Curie temperature $T_{C1}$, the magnetization of the recording layer (first layer) disappears. In addition, since $T_H$ is near the Curie temperature $T_{C2}$, the magnetization of the reference layer (second layer) also disappears completely or almost completely. The bias field Hb in the "A direction" or "non-A direction" is applied to the medium in accordance with a type of medium. The bias field Hb may be a stray field from the medium itself. For the sake of simplicity, assume that the bias field Hb in the "non-A direction" is applied to the medium. Since the medium is moving, a given irradiated portion is immediately separated apart from the laser beam, and is cooled. When the medium temperature is decreased under the presence of Hb, the direction of magnetization of the second layer is reversed to the "non-A direction" based on Hb (CONDITION 2 in Fig. 7).

When the medium is further cooled and the medium temperature is decreased slightly below $T_{C1}$, magnetization of the first layer appears again. In this case, the direction of magnetization of the first layer is influenced by that of the second layer through a magnetic coupling (exchange coupling) force. As a result, magnetization

⇓ (the P type medium) or ⇑ (the A type medium) is formed according to the type of medium. This state corresponds to CONDITION 3 (P type) or 4 (A type) in Fig. 7.

A change in condition caused by the high-level laser beam will be called a high-temperature cycle herein.

A low-level laser beam is irradiated on the medium to increase the medium temperature to $T_L$. Since $T_L$ is near the Curie temperature $T_{C1}$, the magnetization of the first layer disappears completely or almost completely. However, since $T_L$ is lower than the Curie temperature $T_{C2}$, the magnetization of the second layer does not disappear. This state is represented by CONDITION 5 in Fig. 7. In this state, although the bias field Hb is unnecessary, it cannot be turned on or off at high speed (within a short period of time). Therefore, the bias field Hb in the high-temperature cycle is left applied inevitably.

However, since the $H_{C2}$ is kept high, the magnetization of the second layer will not be reversed by Hb. Since the medium is moving, a given irradiated portion is immediately separated apart from the laser beam, and is cooled. As cooling progresses, the magnetization of the first layer appears again. The direction of magnetization appearing in this case is influenced by that of the second layer through the magnetic coupling force. As a result, magnetization ⇑ (P type) or ⇓ (A type) appears according to the type of medium. This magnetization is left unchanged at the room temperature. This state corresponds to CONDITION 6 (P type) or 7 (A type) in Fig. 7.

A change in condition caused by the low-level laser beam will be called a low-temperature cycle herein.

As described above, bits having either magnetization ⇑ or ⇓ , which are opposite to each other, are formed in the high- and low-temperature cycles independently of the direction of magnetization of the first layer. More

5

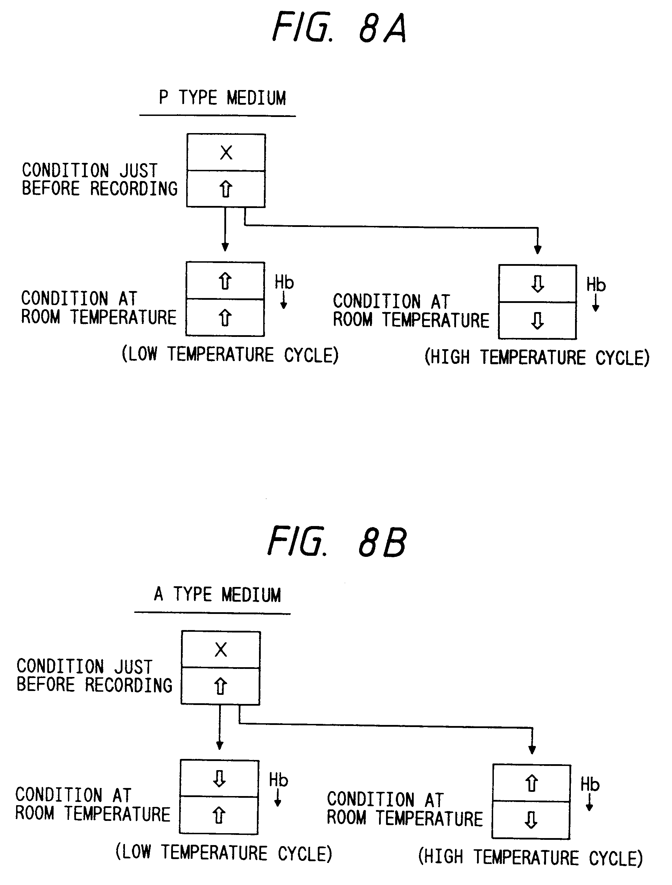

specifically, an overwrite operation is enabled by pulse-modulating the laser beam between high level (high-temperature cycle) and low level (low-temperature cycle) in accordance with information. Refer to Figs. 8A and 8B.

Figs. 8A and 8B illustrate states of magnetization at the room temperature or as a result when the medium temperature is returned to the room temperature.

In the above description, both the first and second layers have no compensation temperature $T_{comp.}$ between the room temperature and the Curie temperature. However, when the compensation temperature $T_{comp.}$ is present, if the medium temperature exceeds it, ① the direction of magnetization is reversed, and ② A and P types are reversed. For these reasons, a description must be complicated accordingly. In this case, the direction of the bias field Hb is opposite to the direction ↓ in the above description at the room temperature. That is, Hb in the same direction as the direction ↑ of magnetization of the second layer aligned in the "initialization" is applied.

A recording medium normally has a disk shape, and is rotated during recording. For this reason, a recorded portion (bit) is influenced again by an external field, e.g., Hini. during one revolution. As a result, the direction of magnetization of the second layer is aligned in the original "A direction" ⇑. In other words, the second layer is "initialized". However, at the room temperature, the magnetization of the second layer can no longer influence that of the first layer, and the recorded information can be held.

If linearly polarized light is irradiated on the first layer, since light reflected thereby includes information, the information can be reproduced as in the conventional magnetooptical recording medium. Note that a method of transferring information in the first layer to the second layer aligned in the original "A direction" ⇑ by applying a reproduction field $H_R$ before reproduction or a method of naturally transferring information in the first layer to the second layer as soon as the influence of Hini. disappears without applying the reproduction field $H_R$ is also available depending on composition designs of the first and second layers. In this case, information may be reproduced from the second layer.

A perpendicular magnetic film constituting each of the recording layer (first layer) and the reference layer (second layer) is selected from the group consisting of ① amorphous or crystalline ferromagnetic and ferrimagnetic materials having no compensation temperature and having a Curie temperature, and ② an amorphous or crystalline ferrimagnetic material having both the compensation temperature and the Curie temperature.

The first category which utilizes the Curie temperature as the magnetization reversing temperature has been described. In contrast to this, the second category utilizes decreased $H_C$ at a predetermined temperature higher than the room temperature. In a medium of the second category, substantially the same description as the first category can be applied except that a temperature $T_{S1}$ at which the recording layer (first layer) is magnetically coupled to the reference layer (second layer) is used in place of $T_{C1}$ in the first category, and a temperature $T_{S2}$ at which the direction of magnetization of the second layer is reversed by Hb is used in place of $T_{C2}$.

In the second category, when the coercivity of the first layer is represented by $H_{C1}$; that of the second layer, $H_{C2}$; a temperature at which the first layer is magnetically coupled to the second layer, $T_{S1}$; a temperature at which the magnetization of the second layer is reversed by Hb, $T_{S2}$; a room temperature, $T_R$; a medium temperature obtained when a low-level laser beam is irradiated, $T_L$; that obtained when a high-level laser beam is irradiated, $T_H$; a coupling field applied to the first layer, $H_{D1}$; and a coupling field applied to the second layer, $H_{D2}$, the recording medium satisfies Formula 6 below, and satisfies Formulas 7 to 10 at the room temperature:

$$T_R < T_{S1} \approx T_L < T_{S2} \approx T_H \quad \text{Formula} \quad 6$$
$$H_{C1} > H_{C2} + |H_{D1} \mp H_{D2}| \quad \text{Formula} \quad 7$$
$$H_{C1} > H_{D1} \quad \text{Formula} \quad 8$$
$$H_{C2} > H_{D2} \quad \text{Formula} \quad 9$$
$$H_{C2} + H_{D2} < |Hini.| < H_{C1} \pm H_{D1} \quad \text{Formula} \quad 10$$

In the above formulas, of double signs ± and ∓, the upper sign corresponds to an A (antiparallel) type medium, and the lower sign corresponds to a P (parallel) type medium (these media will be described later).

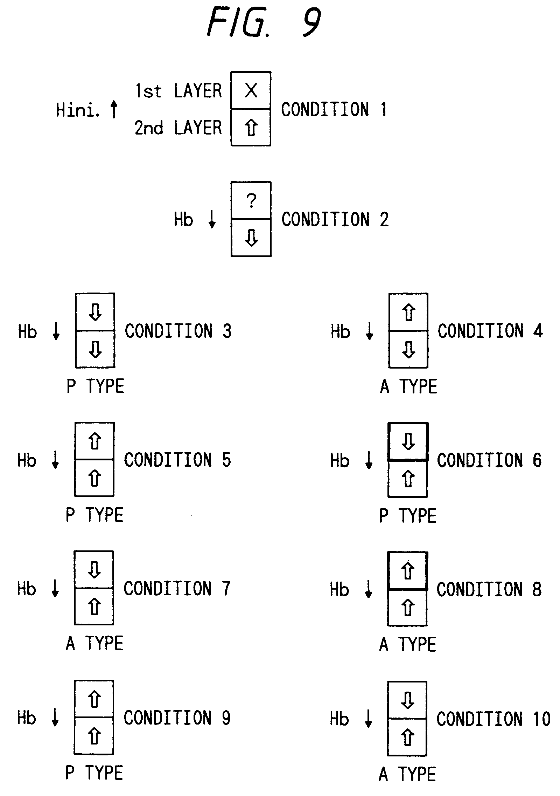

In the second category, when the medium is at the high temperature $T_H$, the magnetization of the second layer does not disappear, but is sufficiently weak. The magnetization of the first layer disappears, or is sufficiently weak. Even if sufficiently weak magnetization is left in both the first and second layers, the bias field Hb ↓ is sufficiently large, and the Hb ↓ forces the direction of magnetization of the second layer and that of the first layer in some cases to follow that of the Hb ↓. This state corresponds to CONDITION 2 in Fig. 9.

Thereafter, the second layer influences the first layer via $\sigma_w$ ① immediately, or ② when cooling progresses after irradiation of the laser beam is stopped and the medium temperature is decreased below $T_H$, or ③ when the irradiated portion is away from Hb, thereby aligning the direction of magnetization of the first layer in a stable direction. As a result, CONDITION 3 (P type) or 4 (A type) in Fig. 9 is established. When the previous recorded state (bit) is stable for the direction of magnetization of the first layer, the direction of magnetization of the first layer is left unchanged. The unchanged state is the same as CONDITION 3 or 4 in Fig. 9.

On the other hand, when the medium is at the low temperature $T_L$, both the first and second layers do not lose their magnetization. However, the magnetization of the first layer is sufficiently weak. In this case, there are two bit states, i.e., CONDITIONs 5 and 6 in Fig. 9 for P type, and there are also two bit states, i.e., CONDITIONs 7 and 8 in Fig. 9 for A type. In CONDITIONs 6 and 8, a magnetic wall (indicated by a bold line) is generated between the first and second layers, and the medium is in a relatively unstable (quasi-stable) condition. The medium portion in this condition is applied with Hb ↓ immediately before it reaches the irradiation position of the laser beam. Nevertheless, CONDITION 6 or 8 can be maintained. Because, since the second layer has sufficient magnetization at the room temperature, the direction of magnetization of the second layer will not be reversed by Hb ↓. The first layer in CONDITION 8, whose direction of magnetization is opposite to Hb ↓, receives the influence of the exchange coupling force $\sigma_w$ larger than the influence of Hb ↓, and the direction of magnetization of the first layer is held in the same direction as that of the second layer since the medium is of P type.

Thereafter, the portion in CONDITION 6 or 8 is irradiated with a low-level laser beam. For this reason, the medium temperature is increased. Upon an increase in medium temperature, the coercivities of the two layers are decreased. However, since the second layer has a high Curie temperature, a decrease in coercivity $H_{C2}$ is small, and the "A direction" ⇑ is maintained without being overcome with Hb ↓. On the other hand, since the medium temperature is lower than the Curie temperature $T_{C1}$ of the first layer although the first layer has the low Curie temperature, the coercivity $H_{C1}$ remains. However, since the coercivity $H_{C1}$ is small, the first layer receives ① the influence of Hb ↓ and ② the influence via the exchange coupling force $\sigma_w$ from the second layer (force for aligning the direction of magnetization of the first layer in the same direction as that of the second layer in P type). In this case, the latter influence is stronger than the former influence, and the following formulas are simultaneously satisfied:

$$H_{C1} + Hb < \frac{\sigma_w}{2M_{S1}t_1} \quad \text{Formula} \quad 10\text{-}2$$

and

$$H_{C2} + Hb > \frac{\sigma_w}{2M_{S2}t_2} \quad \text{Formula} \quad 10\text{-}3$$

The lowest temperature at which these formulas are simultaneously satisfied will be called $T_{LS}$. In other words, the lowest temperature at which the magnetic wall in CONDITION 6 or 8 disappears is $T_{LS}$. As a result, CONDITION 6 transits to CONDITION 9, and CONDITION 8 transits to CONDITION 10. On the other hand, CONDITION 5 originally having no magnetic wall is the same as CONDITION 9, and CONDITION 7 is the same as CONDITION 10. Consequently, a bit in CONDITION 9 (P type) or 10 (A type) is formed upon irradiation of the low-level beam regardless of the previous state (CONDITION 5 or 6 for P type, or CONDITION 7 or 8 for A type).

This state is maintained when the medium temperature is decreased to the room temperature after the laser beam irradiation is stopped or the bit falls outside the irradiation position. CONDITION 9 (P type) or 10 (A type) in Fig. 9 is the same as CONDITION 6 (P type) or 7 (A type) in Fig. 7.

As can be understood from the above description, the low-temperature cycle is executed without increasing the medium temperature up to the Curie temperature $T_{C1}$ of the first layer. Even when the low-temperature cycle is executed at a temperature equal to or higher than $T_{C1}$, since the medium temperature is increased from the room temperature to $T_{C1}$ via $T_{LS}$, CONDITION 6 transits to CONDITION 9 for P type, and CONDITION 8 transits to CONDITION 10 for A type at that time. Thereafter, the medium temperature reaches $T_{C1}$, and CONDITION 5 shown in Fig. 7 is established.

In the above description, both the first and second layers have no compensation temperature $T_{comp.}$ between the room temperature and the Curie temperature. However, when the compensation temperature $T_{comp.}$ is present, if the medium temperature exceeds it, ① the direction of magnetization is reversed, and ② A and P types are reversed. For these reasons, a description must be complicated accordingly. In this case, the direction of the bias field Hb is opposite to the direction in the above description at the room temperature.

In both the first and second categories, the recording medium is preferably constituted by the recording layer (first layer) and the reference layer (second layer) each of which comprises an amorphous ferrimagnetic material selected from transition metal (e.g., Fe, Co) - heavy rare earth metal (e.g., Gd, Tb, Dy, and the like) alloy compositions.

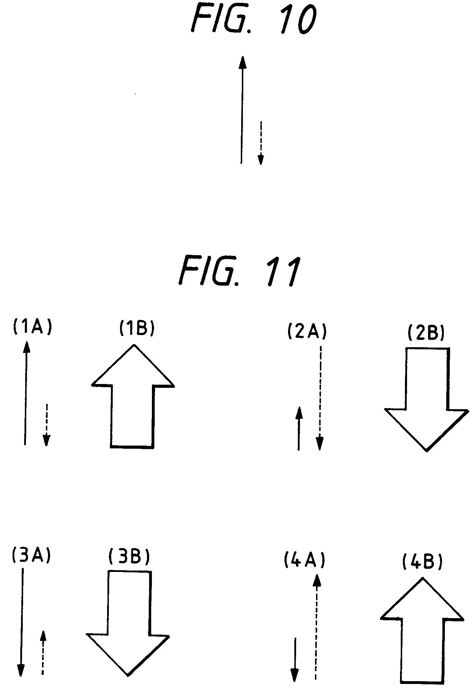

When the materials of both the first and second layers are selected from the transition metal-heavy rare earth metal alloy compositions, the direction and level of magnetization appearing outside the alloys are determined by the relationship between the direction and level of spin of transition metal (to be abbreviated to as TM hereinafter) atoms, and those of heavy rare earth metal (to be abbreviated to as RE hereinafter) atoms inside the alloys. For example, the direction and level of TM spin are represented by a dotted vector $\uparrow$, those of RE spin are represented by a solid vector $\uparrow$, and the direction and level of magnetization of the entire alloy are represented by a double-solid vector $\Uparrow$. In this case, the vector $\Uparrow$ is expressed as a sum of the vectors $\uparrow$ and $\uparrow$. However, in the alloy, the vectors $\uparrow$ and $\uparrow$ are directed in the opposite directions due to the mutual effect of the TM spin and the RE spin. Therefore, when strengths of these vectors are equal to each other, the sum of $\downarrow$ and $\uparrow$ or the sum of $\downarrow$ and $\uparrow$ is zero (i.e., the level of magnetization appearing outside the alloy becomes zero). The alloy composition making the sum of vectors zero is called a compensation composition. When the alloy has another composition, it has a strength equal to a difference between the strengths of the two spins, and has a vector $\Uparrow$ or $\Downarrow$ having a direction equal to that of the larger vector $\uparrow$ or $\uparrow$. Thus, a spin state of the alloy is expressed by illustrating vectors $\uparrow$ and $\uparrow$ adjacent to each other, as shown in, e.g., Fig. 10. The spin state of the alloy can be roughly classified into four states, as shown in Figs. 11(1A) to 11(4A). Vectors $\Uparrow$ or $\Downarrow$ of the alloy in the states shown in Figs. 11I(1A) to 11(4A) are as shown in Figs. 11(1B) to 11(4B). For example, the alloy in the spin state shown in Fig. 11(1A) has a vector shown in Fig. 11(1B). Note that the RE spin $\uparrow$ is larger than the TM spin $\uparrow$ at a temperature lower than the compensation temperature ($T_{comp.}$).

When one of the strengths of the vectors of the RE and TM spins is larger than the other, the alloy composition is referred to as "oo rich" named after the larger spin name (e.g., RE rich).

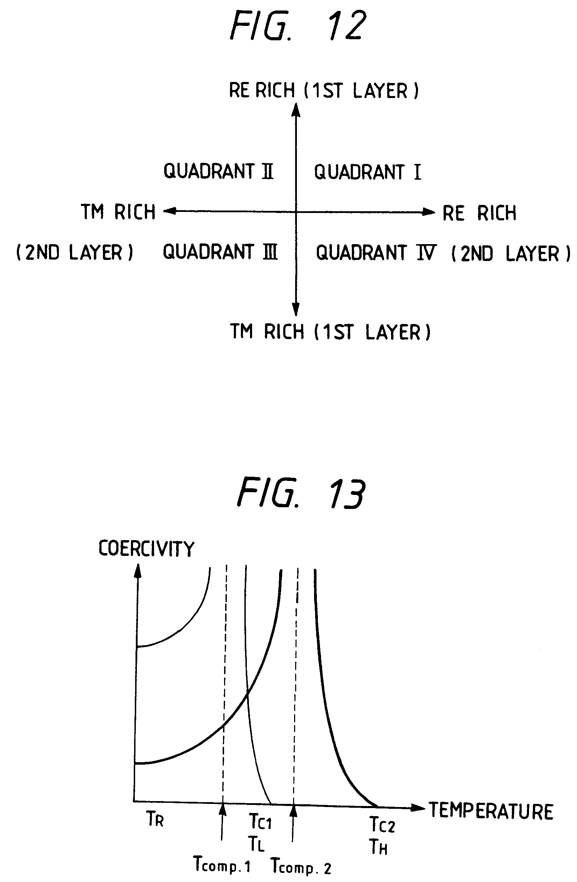

Both the first and second layers can be classified into TM rich and RE rich compositions. Therefore, when the composition of the first layer is plotted along the ordinate and that of the second layer is plotted along the abscissa, the types of medium as a whole of the basic invention can be classified into four quadrants, as shown in Fig. 12. (In Fig. 12, the intersection of the abscissa and the ordinate represents the compensation composition of the two layers.) The P type medium described above belongs to Quadrants I and III, and the A type medium belongs to Quadrants II and IV.

In view of a change in coercivity against a change in temperature, a given alloy composition has characteristics wherein the coercivity temporarily increases infinitely and then abruptly decreases before a temperature reaches the Curie temperature (at which the coercivity is zero). The temperature corresponding to the infinite coercivity is called a compensation temperature ($T_{comp.}$). No compensation temperature is present between the room temperature and the Curie temperature in the TM rich alloy composition. The compensation temperature below the room temperature is nonsense in the magnetooptical recording, and hence, it is assumed in this specification that the compensation temperature is present between the room temperature and the Curie temperature.

If the first and second layers are classified in view of the presence/absence of the compensation temperature, the recording medium can be classified into four types. A medium in Quadrant I includes all the four types of media. When the recording layer (first layer) and the reference layer (second layer) are classified in view of their RE or TM rich characteristics and in view of the presence/absence of the compensation temperature, recording media can be classified into nine classes shown in Table 1 below.

## Table 1

| Class | Quadrant I (P type) | | Type |
|---|---|---|---|
| | First Layer: RE Rich | Second Layer: RE Rich | |
| 1 | $T_{comp.}$ | $T_{comp.}$ | 1 |
| 2 | No $T_{comp.}$ | $T_{comp.}$ | 2 |
| 3 | $T_{comp.}$ | No $T_{comp.}$ | 3 |
| 4 | No $T_{comp.}$ | No $T_{comp.}$ | 4 |
| Class | Quadrant II (A type) | | Type |
| | First Layer: RE Rich | Second Layer: TM Rich | |
| 5 | $T_{comp.}$ | No $T_{comp.}$ | 3 |
| 6 | No $T_{comp.}$ | No $T_{comp.}$ | 4 |
| Class | Quadrant III (P type) | | Type |
| | First Layer: TM Rich | Second Layer: TM Rich | |
| 7 | No $T_{comp.}$ | No $T_{comp.}$ | 4 |
| Class | Quadrant IV (A type) | | Type |
| | First Layer: TM Rich | Second Layer: RE Rich | |
| 8 | No $T_{comp.}$ | $T_{comp.}$ | 2 |
| 9 | No $T_{comp.}$ | No $T_{comp.}$ | 4 |

The principle of an overwrite operation will be exemplified in detail below for each of Classes shown in Table 1. As an external means in the "initialization", an initial field Hini. is used. In place of Hini., an exchange coupling force from a third layer may be used. As for a bias field Hb, an exchange coupling force from a third or fourth layer may be used in place of Hb.

[Description of Class 1]

The principle of an over-write operation will be described in detail below using a specific medium No. 1 belonging to a recording medium of Class 1 (P type, Quadrant I, Type 1).
The medium No. 1 satisfies Formula 11:

$$T_R < T_{comp.1} < T_{C1} \approx T_L \approx T_{comp.2} < T_{C2} \approx T_H \quad \text{Formula} \quad 11$$

Fig. 13 shows the above-mentioned relationship as a graph. Note that thin curves represent characteristics of the first layer, and bold curves represent those of the second layer.

A condition that reverses only the direction of magnetization of the second layer by the initial field Hini. at the room temperature $T_R$ without reversing that of the first layer is represented by Formula 12. This medium No. 1 satisfies Formula 12:

$$H_{C1} > H_{C2} + \frac{\sigma_w}{2M_{S1}t_1} + \frac{\sigma_w}{2M_{S2}t_2} \quad \text{Formula} \quad 12$$

where

$H_{C1}$:   coercivity of first layer
$H_{C2}$:   coercivity of second layer
$M_{S1}$:   saturation magnetization of first layer
$M_{S2}$:   saturation magnetization of second layer
$t_1$ :   film thickness of first layer
$t_2$ :   film thickness of second layer
$\sigma_w$ :   exchange coupling force or interface wall energy

At this time, a condition for the field Hini. is represented by Formula 15. If the field Hini. disappears, the reversed magnetization of the second layer is influenced by the magnetization of the first layer through an exchange coupling force. The conditions that can hold the direction of magnetization of the second layer without re-reversing it are represented by Formulas 13 and 14. The medium No. 1 satisfies Formulas 13 and 14:

$$H_{C1} > \frac{\sigma_w}{2M_{S1}t_1} \quad \text{Formula} \quad 13$$

$$H_{C2} > \frac{\sigma_w}{2M_{S2}t_2} \quad \text{Formula} \quad 14$$

$$H_{C2} + \frac{\sigma_w}{2M_{S2}t_2} < |Hini.| < H_{C1} - \frac{\sigma_w}{2M_{S1}t_1} \quad \text{Formula} \quad 15$$

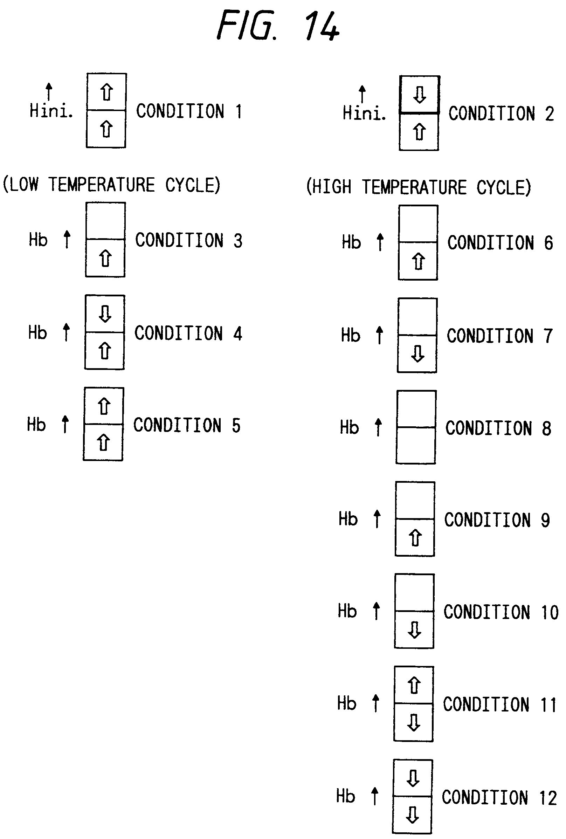

The magnetization of the second layer of the recording medium which satisfies conditions given by Formulas 12 to 14 at the room temperature is aligned in, e.g., the "A direction" ⇑ (Figs. 11(1A) and 11(1B)) by Hini. which satisfies Formula 15 before a time immediately before recording. At this time, the first layer is left in the recorded state. This condition corresponds to CONDITION 1 or 2 in Fig. 14. This condition is held until a time immediately before recording. Note that the bias field Hb is applied in the "A direction" ↑.

— Low-temperature Cycle —

A low-level laser beam is irradiated to increase the medium temperature to $T_L$. Since $T_L$ is almost equal to the Curie temperature $T_{C1}$ of the first layer, the magnetization of the first layer disappears. Fig. 14 shows this condition as CONDITION 3.

In CONDITION 3, when the irradiated portion falls outside the spot region of the laser beam, the medium temperature begins to be decreased. When the medium temperature is decreased slightly below $T_{C1}$, RE and TM spins (Fig. 11(1A)) of the second layer influence those of the first layer through the exchange coupling force.

That is, a force acts to respectively align RE spins (↑) and TM spins ( ↓ ) . As a result, "non-A-directed" ⇓ magnetization overcomes the bias field ↑ Hb, and appears in the first layer. Fig. 14 shows this condition as CONDITION 4. Since the temperature of the medium in this condition is equal to or higher than $T_{comp.1}$, the TM spin is stronger than the RE spin.

When the medium temperature is cooled below $T_{comp.1}$, the relationship between the RE spin and the TM spin of the first layer is reversed, and the spin state transits from Fig. 11(2A) to Fig. 11(1A). As a result, the direction of magnetization of the first layer is reversed to the "A direction" ⇑. Fig. 14 shows this condition as CONDITION 5.

CONDITION 5 is maintained after the medium temperature is decreased to the room temperature. As a result, the magnetization of the first layer is aligned in the "A direction" ⇑ regardless of a previously recorded bit, and a bit having this direction is formed.

— High-temperature Cycle —

When a high-level laser beam is irradiated to increase the medium temperature to $T_L$, since $T_L$ is almost equal to the Curie temperature $T_{C1}$ of the first layer, the magnetization of the first layer disappears Fig. 14 shows this condition as CONDITION 6.

When beam irradiation is further continued, the medium temperature is further increased. When the medium temperature slightly exceeds $T_{comp.2}$ of the second layer, the relationship between the strengths of RE and TM spins is reversed although their directions are left unchanged, and the spin state transits from Fig. 11(1A) to Fig. 11(2A). For this reason, the magnetization of the second layer is reversed to the "non-A direction" ⇓. Fig. 14 shows this condition as CONDITION 7.

However, since $H_{C2}$ is still large at this temperature, the magnetization of the second layer will not be reversed by ↑ Hb. When the temperature is further increased and reaches $T_H$, the temperature of the second layer becomes almost equal to the Curie temperature $T_{C2}$, and magnetization of the second layer also disappears. Fig. 14 shows this condition as CONDITION 8.

When the irradiated portion falls outside the spot region of the laser beam in CONDITION 8, the medium temperature begins to fall. When the medium temperature is decreased slightly below $T_{C2}$, magnetization appears in the second layer. In this case, "A-directed" ⇑ magnetization appears due to ↑ Hb. Since the medium temperature is equal to or higher than $T_{comp.2}$, the TM spin is stronger than the RE spin, and the spin state is as shown in Fig. 11(4A). Fig. 14 shows this condition as CONDITION 9. However, since the temperature is still higher than $T_{C1}$, no magnetization appears in the first layer.

When the medium temperature is further decreased below $T_{comp.2}$, the relationship between the strengths of RE and TM spins is reversed although their directions are left unchanged, and the spin state transits from Fig. 11(4A) to Fig. 11(3A). As a result, the magnetization of the entire alloy of the second layer is reversed from ⇑ to the "non-A direction" ⇓. Fig. 14 shows this condition as CONDITION 10.

In CONDITION 10, since the medium temperature is still higher than $T_{C1}$, the magnetization of the first layer is kept disappearing. In addition, since $H_{C2}$ at this temperature is large, the magnetization ⇃ of the second layer will not be reversed by ↑ Hb.

When the temperature is further decreased slightly below $T_{C1}$, magnetization appears in the first layer. In this case, the exchange coupling force from the second layer acts to respectively align the RE spins (↓) and TM spins (⇡). Since the temperature of the first layer is equal to or higher than $T_{comp.1}$, the spin state shown in Fig. 11(4A) is formed in the first layer, and magnetization ⇑ shown in Fig. 11(4B) appears in the first layer. This condition corresponds to CONDITION 11.

When the medium temperature is decreased from the temperature in CONDITION 11 to a temperature below $T_{comp.1}$, the relationship between the strengths of the RE spin and the TM spin of the first layer is reversed, and the spin state transits from Fig. 11(4A) to Fig. 11(3A). As a result, magnetization ⇓ shown in Fig. 11(3B) appears. Fig. 14 shows this condition as CONDITION 12.

The medium temperature is then decreased from the temperature in CONDITION 12 to the room temperature. Since $H_{C1}$ at the room temperature is sufficiently large, the magnetization of the first layer will not be reversed by ↑ Hb, and CONDITION 12 can be maintained. Thus, a bit in the "non-A direction" ⇓ is formed.

[Description of Class 2]

The principle of the overwrite operation will be described in detail below using a specific medium No. 2 belonging to a recording medium of Class 2 (P type, Quadrant I, Type 2) shown in Table 1.

This medium No. 2 has a relation given by Formula 16:

$$T_R < T_{C1} \approx T_L \approx T_{comp.2} < T_{C2} \approx T_H \quad \text{Formula} \quad 16$$

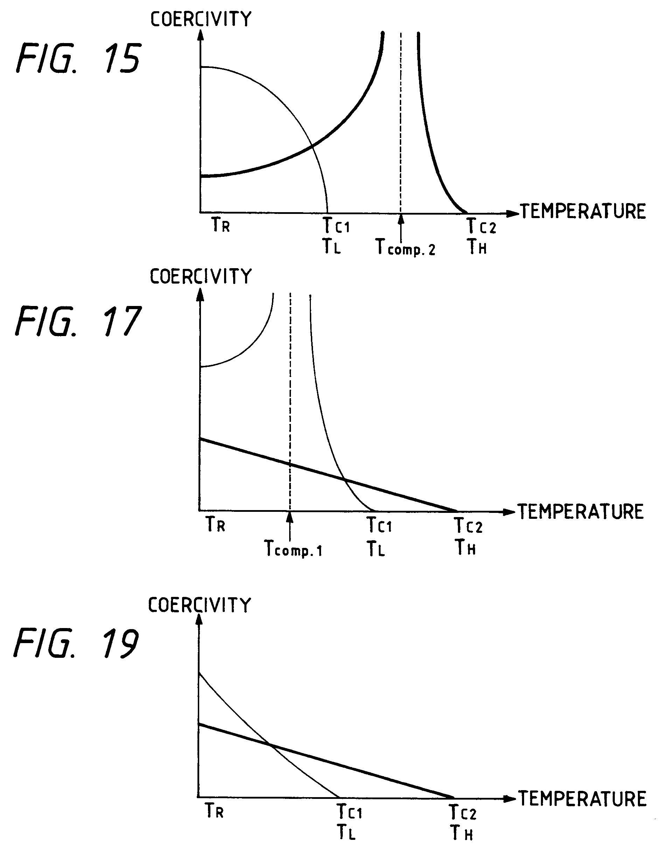

Fig. 15 shows this relation as a graph.

A condition for reversing only the magnetization of the second layer by the initial field Hini. without reversing that of the first layer at the room temperature $T_R$ is given by Formula 17. This medium No. 2 satisfies Formula 17:

$$H_{C1} > H_{C2} + \frac{\sigma_w}{2M_{S1}t_1} + \frac{\sigma_w}{2M_{S2}t_2} \quad \text{Formula} \quad 17$$

In this case, a condition for Hini. is represented by Formula 20. When Hini. disappears, the reversed magnetization of the second layer is influenced by that of the first layer through the exchange coupling force. Conditions for maintaining the magnetization of the second layer without re-reversing it are given by Formulas 18 and 19. This medium No. 2 satisfies Formulas 18 and 19:

$$H_{C1} > \frac{\sigma_w}{2M_{S1}t_1} \quad \text{Formula} \quad 18$$

$$H_{C2} > \frac{\sigma_w}{2M_{S2}t_2} \quad \text{Formula} \quad 19$$

$$H_{C2} + \frac{\sigma_w}{2M_{S2}t_2} < |Hini.| < H_{C1} - \frac{\sigma_w}{2M_{S1}t_1} \quad \text{Formula} \quad 20$$

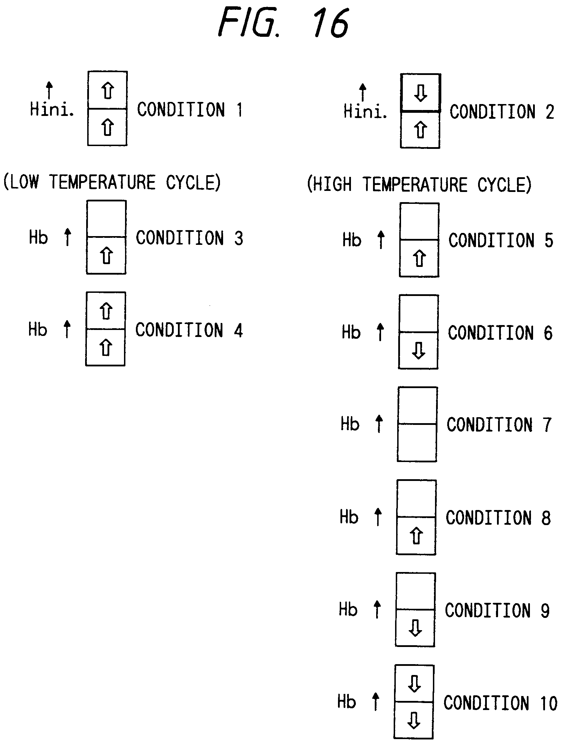

Magnetization of the second layer of the recording medium which satisfies the conditions given by Formulas 17 to 19 at the room temperature is aligned in, e.g., the "A direction" ⇑ (the spin state is as shown in Fig. 11(1A)) by Hini. satisfying a condition given by Formula 20 before a time immediately before recording. In this case, the first layer is left in the recorded state. Fig. 16 shows this condition as CONDITION 1 or 2. This condition is held until a time immediately before recording. In this case, the bias field Hb is applied in the "A direction" ↑.

— Low-temperature Cycle —

A low-level laser beam is irradiated to increase the medium temperature to $T_L$. Since $T_L$ is almost equal to the Curie temperature $T_{C1}$ of the first layer, the magnetization of the first layer disappears. Fig. 16 shows this condition as CONDITION 3.

When the irradiated portion falls outside the spot region of the laser beam in CONDITION 3, the medium temperature begins to fall. When the medium temperature is decreased slightly below $T_{C1}$, the RE and TM spins (Fig. 11(1A)) of the second layer influence those of the first layer through the exchange coupling force. More specifically, a force acts to respectively align RE spins (↑) and TM spins ( ↓ ) ⋅ As a result, the spin state shown in Fig. 11(1A) is formed in the first layer, and "A-directed" ⇑ magnetization appears. Fig. 16 shows this condition as CONDITION 4.

CONDITION 4 is left unchanged when the medium temperature is further decreased. As a result, the magnetization of the first layer is aligned in the "A direction" ⇑ regardless of the previously recorded bit, and a bit in the "A direction" ⇑ is formed.

— High-temperature Cycle —

A high-level laser beam is irradiated. As a result, when the medium temperature is increased to $T_L$, since $T_L$ is almost equal to the Curie temperature $T_{C1}$ of the first layer, magnetization of the first layer disappears. This condition corresponds to CONDITION 5.

When beam irradiation is further continued, the medium temperature is further increased. When the medium temperature slightly exceeds $T_{comp.2}$ of the second layer, the relationship between the strengths of RE and TM spins is reversed although their directions are left unchanged, and the spin state transits from Fig. 11(1A) to Fig. 11(2A). For this reason, the magnetization of the entire alloy of the second layer is reversed to the "non-A direction" ⇓ shown in Fig. 11(2B). Fig. 16 shows this condition as CONDITION 6.

However, since $H_{C2}$ is still large at this temperature, the magnetization of the second layer will not be reversed by ↑ Hb. When the temperature is further increased and reaches $T_H$, the temperature of the second layer becomes almost equal to the Curie temperature $T_{C2}$, and the magnetization of the second layer disappears. This condition corresponds to CONDITION 7.

When the irradiated portion falls outside the spot region of the laser beam in CONDITION 7, the medium temperature begins to fall. When the medium temperature is decreased slightly below $T_{C2}$, magnetization appears in the second layer. In this case, "A-directed" ⇑ magnetization appears due to ↑ Hb. Since the medium temperature is higher than $T_{comp.2}$, the TM spin is stronger than the RE spin, and the spin state shown in Fig. 11(4A) is established. However, since the temperature is still higher than $T_{C1}$, no magnetization appears in the first layer. This condition corresponds to CONDITION 8.

When the medium temperature is further decreased below $T_{comp.2}$, the relationship between the strengths of RE and TM spins is reversed although their directions are left unchanged, and the spin state transits from Fig. 11(4A) to Fig. 11(3A). As a result, the magnetization of the entire alloy of the second layer is reversed from ⇑ to the "non-A direction" ⇓ . Fig. 16 shows this condition as CONDITION 9.

In CONDITION 9, since the medium temperature is still higher than $T_{C1}$, the magnetization of the first layer is kept disappearing. In addition, since $H_{C2}$ at this temperature is large, the magnetization of the second layer will not be reversed by ↑ Hb.

When the temperature is further decreased slightly below $T_{C1}$, magnetization appears in the first layer. In this case, the exchange coupling force from the second layer acts to respectively align the RE spins ($\downarrow$) and

TM spins ($\uparrow$). Thus, magnetization in the spin state shown in Fig. 11(3A), i.e., magnetization $\Downarrow$ shown in Fig. 11(3B) appears in the first layer. This condition corresponds to CONDITION 10 in Fig. 16.

The medium temperature is then decreased from the temperature in CONDITION 10 to the room temperature. Since $H_{C1}$ at the room temperature is sufficiently large, the magnetization of the first layer will not be reversed by $\uparrow$ Hb, and CONDITION 10 can be maintained. Thus, a bit in the "non-A direction" $\Downarrow$ is formed.

[Description of Class 3]

The principle of the overwrite operation will be described in detail below using a specific medium No. 3 belonging to a recording medium of Class 3 (P type, Quadrant I, Type 3) shown in Table 1.

This medium No. 3 has a relation given by Formula 21:

$$T_R < T_{comp.1} < T_{C1} \approx T_L < T_{C2} \approx T_H \quad \text{Formula} \quad 21$$

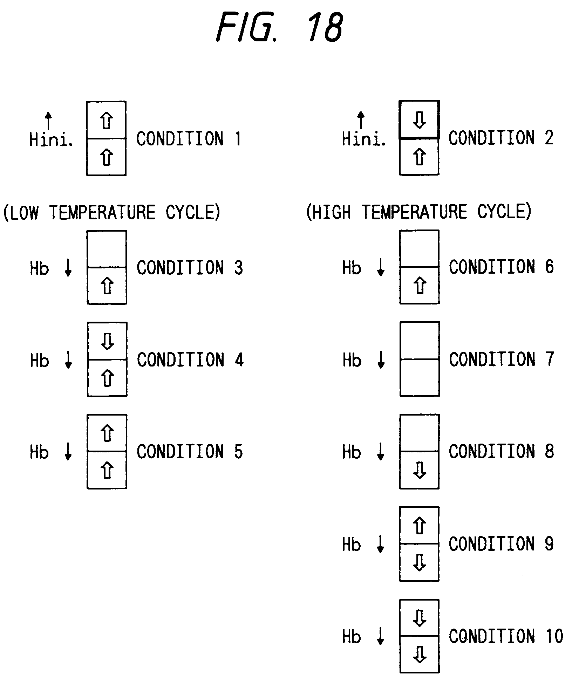

Fig. 17 shows this relation as a graph.

A condition for reversing only the magnetization of the second layer by the initial field Hini. without reversing that of the first layer at the room temperature $T_R$ is given by Formula 22. This medium No. 3 satisfies Formula 22:

$$H_{C1} > H_{C2} + \frac{\sigma_w}{2M_{S1}t_1} + \frac{\sigma_w}{2M_{S2}t_2} \quad \text{Formula} \quad 22$$

In this case, a condition for Hini. is represented by Formula 25. When Hini. disappears, the reversed magnetization of the second layer is influenced by that of the first layer through the exchange coupling force. Conditions for maintaining the magnetization of the second layer without re-reversing it are given by Formulas 23 and 24. This medium No. 3 satisfies Formulas 23 and 24:

$$H_{C1} > \frac{\sigma_w}{2M_{S1}t_1} \quad \text{Formula} \quad 23$$

$$H_{C2} > \frac{\sigma_w}{2M_{S2}t_2} \quad \text{Formula} \quad 24$$

$$H_{C2} + \frac{\sigma_w}{2M_{S2}t_2} < |Hini.| < H_{C1} - \frac{\sigma_w}{2M_{S1}t_1} \quad \text{Formula} \quad 25$$

Magnetization of the second layer of the recording medium which satisfies the conditions given by Formulas 22 to 24 at the room temperature is aligned in, e.g., the "A direction" $\Uparrow$ (the spin state is as shown in Fig. 11(1A)) by Hini. satisfying a condition given by Formula 25 before a time immediately before recording. In this case, the first layer is left in the recorded state. Fig. 18 shows this condition as CONDITION 1 or 2. This condition is held until a time immediately before recording. In this case, the bias field Hb is applied in the "non-A direction" $\downarrow$.

— Low-temperature Cycle —

A low-level laser beam is irradiated to increase the medium temperature to $T_L$. Since $T_L$ is almost equal to the Curie temperature $T_{C1}$ of the first layer, the magnetization of the first layer disappears. However, since $H_{C2}$ of the second layer is still large at this temperature, the magnetization of the second layer will not be reversed by $\downarrow$ Hb. Fig. 18 shows this condition as CONDITION 3.

When the irradiated portion falls outside the spot region of the laser beam in CONDITION 3, the medium temperature begins to fall. When the medium temperature is decreased slightly below $T_{C1}$, the RE and TM spins of the second layer shown in Fig. 11(1A) influence those of the first layer through the exchange coupling force.

More specifically, a force acts to respectively align RE spins ($\uparrow$) and TM spins ($\downarrow$). As a result, magnetization ($\Downarrow$ in Fig. 11(2B)) having the spin state shown in Fig. 11(1A) appears in the first layer. In this case, since the temperature is equal to or higher than $T_{comp.1}$, the TM spin $\downarrow$ is stronger than the RE spin. Fig. 18 shows this condition as CONDITION 4.

When the medium temperature is decreased below $T_{comp.1}$, the relationship between the RE spin and TM spin of the first layer is reversed, and the spin state transits from Fig. 11(2A) to Fig. 11(1A). As a result, the magnetization of the first layer overcomes ↓ Hb, and is aligned in the "A direction" ⇑ shown in Fig. 11(1B). Fig. 18 shows this condition as CONDITION 5.

CONDITION 5 is maintained after the medium temperature is decreased to the room temperature. As a result, the magnetization of the first layer is aligned in the "A direction" ⇑ regardless of the previously recorded bit, and a bit in the "A direction" ⇑ is formed.

— High-temperature Cycle —

A high-level beam is irradiated. As a result, when the medium temperature is increased to $T_L$, since $T_L$ is almost equal to the Curie temperature $T_{C1}$ of the first layer, the magnetization of the first layer disappears. This condition corresponds to CONDITION 6.

When the beam irradiation further continues and the medium temperature reaches $T_H$, since $T_H$ is almost equal to $T_{C2}$ of the second layer, the magnetization of the second layer also disappears. This condition corresponds to CONDITION 7.

When the irradiated portion falls outside the spot region of the laser beam in CONDITION 7, the medium temperature begins to fall. When the medium temperature is decreased slightly below $T_{C2}$, magnetization appears in the second layer. In this case, magnetization ⇓ appears due to ↓ Hb. The spin state is as shown in Fig. 11(3A) since the medium temperature is lower than $T_{comp.2}$. However, since the temperature is still higher than $T_{C1}$, no magnetization appears in the first layer. This condition corresponds to CONDITION 8.

When the medium temperature is further decreased slightly below $T_{C1}$, magnetization also appears in the first layer. In this case, the magnetization of the second layer influences that of the first layer through the exchange coupling force. As a result, a force acts to respectively align RE spins (↓) and TM spins ( ↕̂ ) . In this case, since the medium temperature is equal to or higher than $T_{comp.1}$, the TM spin is stronger than the RE spin, and the spin state is as shown in Fig. 11(4A). As a result, "A-directed" ⇑ magnetization shown in Fig. 11(4B) appears in the second layer. Fig. 18 shows this condition as CONDITION 9.

When the medium temperature is further decreased from the temperature in CONDITION 9 to a temperature below $T_{comp.1}$, the relationship between the strengths of the TM and RE spins of the first layer is reversed, and the spin state transits from Fig. 11(4A) to Fig. 11(3A). For this reason, the direction of magnetization of the first layer is reversed to the "non-A direction" ⇓ shown in Fig. 11(3B). Fig. 18 shows this condition as CONDITION 10.

The medium temperature is then decreased from the temperature in CONDITION 10 to the room temperature. Since $H_{C1}$ at the room temperature is sufficiently large, the magnetization of the first layer is stably held.

Thus, a bit in the "non-A direction" ⇓ is formed.

In the description of Classes 1 to 3, the low-temperature cycle includes a process for causing the coercivity of the first layer to almost disappear. However, the low-temperature cycle aims at forming a bit in a condition having no magnetic wall from a bit in CONDITION 2 having a magnetic wall. Therefore, a bit in CONDITION 1 having no magnetic wall is left unchanged, and only a bit in CONDITION 2 having a magnetic wall can be converted to a bit in the condition having no magnetic wall. A bit in CONDITION 2 having a magnetic wall is in a quasi-stable state, and is unstable as compared to a bit in CONDITION 1 having no magnetic wall, since magnetization of the second layer acts to align the direction of magnetization of the first layer in a stable condition (no-magnetic wall state as a whole) via $\sigma_w$. For this reason, the coercivity of the first layer need not almost disappear, but need only be weakened. If the coercivity of the first layer need only be weakened, the medium temperature need not be increased to near $T_{C1}$.

The same applies to the following descriptions of Classes 4 to 9.

[Description of Class 4]

The principle of the overwrite operation will be described in detail below using a specific medium No. 4 belonging to a recording medium of Class 4 (P type, Quadrant I, Type 4) shown in Table 1.

This medium No. 4 has a relation given by Formula 26:

$$T_R < T_{C1} \approx T_L < T_{C2} \approx T_H \quad \text{Formula} \quad 26$$

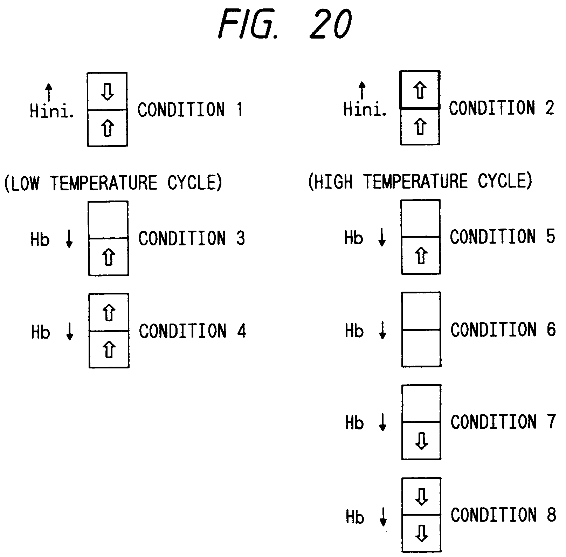

Fig. 19 shows this relation as a graph.

A condition for reversing only the magnetization of the second layer by the initial field Hini. without reversing that of the first layer at the room temperature $T_R$ is given by Formula 27. This medium No. 4 satisfies Formula

27:

$$H_{C1} > H_{C2} + \frac{\sigma_w}{2M_{S1}t_1} + \frac{\sigma_w}{2M_{S2}t_2} \quad \text{Formula} \quad 27$$

In this case, a condition for Hini. is represented by Formula 30. When Hini. disappears, the reversed magnetization of the second layer is influenced by that of the first layer through the exchange coupling force. Conditions for maintaining the magnetization of the second layer without re-reversing it are given by Formulas 28 and 29. This medium No. 4 satisfies Formulas 28 and 29:

$$H_{C1} > \frac{\sigma_w}{2M_{S1}t_1} \quad \text{Formula} \quad 28$$

$$H_{C2} > \frac{\sigma_w}{2M_{S2}t_2} \quad \text{Formula} \quad 29$$

$$H_{C2} + \frac{\sigma_w}{2M_{S2}t_2} < |Hini.| < H_{C1} - \frac{\sigma_w}{2M_{S1}t_1} \quad \text{Formula} \quad 30$$

Magnetization of the second layer of the recording medium which satisfies the conditions given by Formulas 27 to 29 at the room temperature is aligned in, e.g., the "A direction" ⇑ by Hini. satisfying a condition given by Formula 30 before a time immediately before recording. The spin state is as shown in Fig. 11(1A) since the medium temperature is equal to or lower than $T_{comp}$, and the RE spin is stronger than the TM spin. In this case, the first layer is left in the recorded state. Fig. 20 shows this condition as CONDITION 1 or 2. This condition is held until a time immediately before recording. In this case, the bias field Hb is applied in the "non-A direction" ↓.

— Low-temperature Cycle —

A low-level laser beam is irradiated to increase the medium temperature to $T_L$. Since $T_L$ exceeds the Curie temperature $T_{C1}$ of the first layer, magnetization of the first layer disappears. In this state, since $H_{C2}$ is still large at this temperature, the magnetization ⇑ of the second layer will not be reversed by ↓ Hb. This condition corresponds to CONDITION 3 in Fig. 20.

When the irradiated portion falls outside the spot region of the laser beam in CONDITION 3, the medium temperature begins to fall. When the medium temperature is decreased slightly below $T_{C1}$, the RE and TM spins

( ↑↓ ) of the second layer influence those of the first layer through the exchange coupling force. More specifically, a force acts to respectively align RE spins (↑) and TM spins ( ↓ ). As a result, the spin state shown in Fig. 11(1A) appears in the first layer. As a result, "A-directed" magnetization ⇑ shown in Fig. 11(1B) appears against ↓ Hb. This condition corresponds to CONDITION 4 in Fig. 20.

CONDITION 4 is maintained after the medium temperature is decreased to the room temperature. As a result, the magnetization of the first layer is aligned in the "A direction" ⇑ regardless of the previously recorded bit, and a bit in the "A direction" ⇑ is formed.

— High-temperature Cycle —

A high-level beam is irradiated. As a result, when the medium temperature is increased to $T_L$, since $T_L$ is almost equal to the Curie temperature $T_{C1}$ of the first layer, the magnetization of the first layer disappears. This condition corresponds to CONDITION 5 in Fig. 20.

When the beam irradiation further continues and the medium temperature reaches $T_H$, since the temperature $T_H$ of the second layer is almost equal to the Curie temperature $T_{C2}$, the magnetization of the second layer also disappears. This condition corresponds to CONDITION 6.

When the irradiated portion falls outside the spot region of the laser beam in CONDITION 6, the medium temperature begins to fall. When the medium temperature is decreased slightly below $T_{C2}$, magnetization appears in the second layer. In this case, "non-A-directed" magnetization ⇓ appears due to ↓ Hb. In this case, since the medium temperature is equal to or lower than $T_{comp.2}$, the RE spin is stronger than the TM spin, and the spin state shown in Fig. 11(3A) is established. However, since the temperature is still higher than $T_{C1}$, no magnetization appears in the first layer. This condition corresponds to CONDITION 7 in Fig. 20.

When the medium temperature is further decreased slightly below $T_{C1}$, magnetization appears in the first layer. In this case, the exchange coupling force from the second layer acts to respectively align RE spins (↓)

and TM spins $(\hat{\uparrow})$. For this reason, magnetization having the spin state shown in Fig. 11(3A), i.e., magnetization $\Downarrow$ shown in Fig. 11(3B) appears in the first layer. This condition corresponds to CONDITION 8 in Fig. 20.

The medium temperature is then decreased from the temperature in CONDITION 8 to the room temperature. Since $H_{C1}$ at the room temperature is sufficiently large, the magnetization of the first layer is stably held.

Thus, a bit in the "non-A direction" $\Downarrow$ is formed.

[Description of Class 5]

The principle of the overwrite operation will be described in detail below using a specific medium No. 5 belonging to a recording medium of Class 5 (A type, Quadrant II, Type 3) shown in Table 1.

This medium No. 5 has a relation given by Formula 31:

$$T_R < T_{comp.1} < T_{C1} \approx T_L < T_{C2} \approx T_H \quad \text{Formula} \quad 31$$

Fig. 17 shows this relation as a graph.

A condition for reversing only the magnetization of the second layer by the initial field Hini. without reversing that of the first layer at the room temperature $T_R$ is given by Formula 32. This medium No. 5 satisfies Formula 32:

$$H_{C1} > H_{C2} + \left| \frac{\sigma_w}{2M_{S1}t_1} - \frac{\sigma_w}{2M_{S2}t_2} \right| \qquad \text{...Formula 32}$$

In this case, a condition for Hini. is represented by Formula 35. When Hini. disappears, the reversed magnetization of the second layer is influenced by that of the first layer through the exchange coupling force. Conditions for maintaining the magnetization of the second layer without re-reversing it are given by Formulas 33 and 34. This medium No. 5 satisfies Formulas 33 and 34:

$$H_{C1} > \frac{\sigma_w}{2M_{S1}t_1} \quad \text{Formula} \quad 33$$

$$H_{C2} > \frac{\sigma_w}{2M_{S2}t_2} \quad \text{Formula} \quad 34$$

$$H_{C2} + \frac{\sigma_w}{2M_{S2}t_2} < |Hini.| < H_{C1} + \frac{\sigma_w}{2M_{S1}t_1} \quad \text{Formula} \quad 35$$

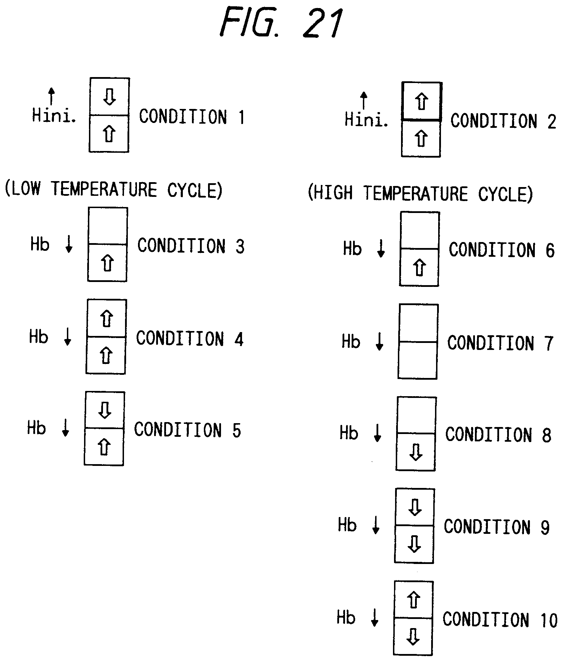

Magnetization of the second layer of the recording medium which satisfies the conditions given by Formulas 32 to 34 at the room temperature is aligned in, e.g., the "A direction" $\Uparrow$ by Hini. satisfying a condition given by Formula 35 before a time immediately before recording. The spin state is as shown in Fig. 11(4A) since $T_{comp.2}$ is lower than the room temperature, and the TM spin is stronger than the RE spin. In this case, the first layer is left in the recorded state. Fig. 21 shows this condition as CONDITION 1 or 2. This condition is held until a time immediately before recording. In this case, the bias field Hb is applied in the "non-A direction" $\downarrow$.

— Low-temperature Cycle —

A low-level laser beam is irradiated to increase the medium temperature to $T_L$. Since $T_L$ is almost equal to the Curie temperature $T_{C1}$ of the first layer, magnetization of the first layer disappears. However, since $H_{C2}$ of the second layer is still large at this temperature, the magnetization of the second layer will not be reversed by $\downarrow$ Hb. Fig. 21 shows this condition as CONDITION 3.

When the beam irradiation is ended in CONDITION 3, the medium temperature begins to fall. When the medium temperature is decreased slightly below $T_{C1}$, the RE and TM spins of the second layer shown in Fig. 11(4A) influence those of the first layer through the exchange coupling force. More specifically, a force acts to respectively align RE spins ($\downarrow$) and TM spins $(\hat{\uparrow})$. As a result, the spin state shown in Fig. 11(4A) appears in the first layer. Since the medium temperature is higher than $T_{comp.1}$, the TM spin is stronger than the RE spin. This spin state forms "A-directed" $\Uparrow$ magnetization shown in Fig. 11(4B) in the first layer. The magnetization $\Uparrow$ appears against $\downarrow$ Hb. Fig. 21 shows this condition as CONDITION 4.

When the medium temperature is further decreased below $T_{comp.1}$, the relationship between the RE spin and TM spin of the first layer is reversed, and the spin state shown in Fig. 11(4A) transits to Fig. 11(3A). As a result, the magnetization of the first layer is aligned in the "non-A direction" $\Downarrow$ . Fig. 21 shows this condition as CONDITION 5

CONDITION 5 is maintained after the medium temperature is decreased to the room temperature. As a result, the magnetization of the first layer is aligned in the "non-A direction" $\Downarrow$ regardless of the previously recorded bit, and a bit in the "non-A direction" $\Downarrow$ is formed.

— High-temperature Cycle —

A high-level beam is irradiated. As a result, when the medium temperature is increased to $T_L$, since $T_L$ is almost equal to the Curie temperature $T_{C1}$ of the first layer, the magnetization of the first layer disappears. This condition corresponds to CONDITION 6 in Fig. 21.

When the beam irradiation further continues and the medium temperature reaches $T_H$, since $T_H$ is almost equal to $T_{C2}$, the magnetization of the second layer also disappears. This condition corresponds to CONDITION 7.

When the irradiated portion falls outside the spot region of the laser beam in CONDITION 7, the medium temperature begins to fall. When the medium temperature is decreased slightly below $T_{C2}$, magnetization appears in the second layer. In this case, "non-A-directed" $\Downarrow$ magnetization appears due to $\downarrow$ Hb. In this case, since the medium temperature is higher than $T_{comp.2}$, the TM spin is stronger than the RE spin, and the spin state shown in Fig. 11(2A) is established. However, since the temperature is higher than $T_{C1}$, no magnetization appears in the first layer. This condition corresponds to CONDITION 8.

When the medium temperature is further decreased slightly below $T_{C1}$, magnetization also appears in the first layer. In this case, the magnetization of the second layer influences that of the first layer through the exchange coupling force. As a result, a force acts to respectively align RE spins ($\uparrow$) and TM spins ($\downarrow$) . In this case, since the medium temperature is equal to or higher than $T_{comp.1}$, the TM spin is stronger than the RE spin. This spin state is shown in Fig. 11(2A). As a result, "non-A-directed" $\Downarrow$ magnetization appears in the first layer. Fig. 21 shows this condition as CONDITION 9.

When the medium temperature is further decreased from the temperature in CONDITION 9 to a temperature below $T_{comp.1}$, the relationship between the strengths of the TM and RE spins of the first layer is reversed, and the spin state transits from Fig. 11(2A) to Fig. 11(1A). At the same time, the medium type is changed from P type to A type. For this reason, the direction of magnetization of the first layer is reversed to the "A direction" $\Uparrow$. Fig. 21 shows this condition as CONDITION 10.

The medium temperature is then decreased from the temperature in CONDITION 10 to the room temperature. Since $H_{C1}$ at the room temperature is sufficiently large, the magnetization of the first layer is stably held. Thus, a bit in the "A direction" R is formed.

[Description of Class 6]

The principle of the overwrite operation will be described in detail below using a specific medium No. 6 belonging to a recording medium of Class 6 (A type, Quadrant II, Type 4) shown in Table 1.

This medium No. 6 has a relation given by Formula 36:

$$T_R < T_{C1} \approx T_L < T_{C2} \approx T_H \quad \text{Formula} \quad 36$$

Fig. 19 shows this relation as a graph.

A condition for reversing only the magnetization of the second layer by the initial field Hini. without reversing that of the first layer at the room temperature $T_R$ is given by Formula 37. This medium No. 6 satisfies Formula 37:

$$H_{C1} > H_{C2} + \left| \frac{\sigma_w}{2M_{S1}t_1} - \frac{\sigma_w}{2M_{S2}t_2} \right| \quad \text{Formula} \quad 37$$

In this case, a condition for Hini. is represented by Formula 40. When Hini. disappears, the reversed magnetization of the second layer is influenced by that of the first layer through the exchange coupling force. Conditions for maintaining the magnetization of the second layer without re-reversing it are given by Formulas 38 and 39. This medium No. 6 satisfies Formulas 38 and 39:

$$H_{C1} > \frac{\sigma_w}{2M_{S1}t_1} \quad \text{Formula} \quad 38$$

$$H_{C2} > \frac{\sigma_w}{2M_{S2}t_2} \quad \text{Formula} \quad 39$$

$$H_{C2} + \frac{\sigma_w}{2M_{S2}t_2} < |Hini.| < H_{C1} + \frac{\sigma_w}{2M_{S1}t_1} \quad \text{Formula} \quad 40$$

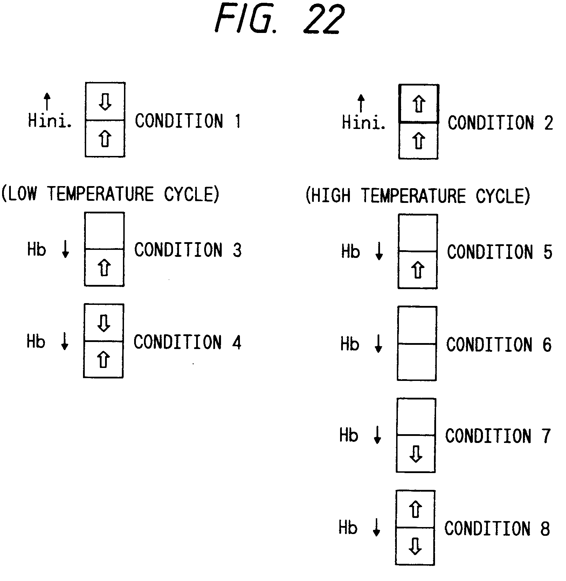

Magnetization of the second layer of the recording medium which satisfies the conditions given by Formulas 37 to 39 at the room temperature is aligned in, e.g., the "A direction" ⇑ by Hini. satisfying a condition given by Formula 40 before a time immediately before recording. Since the medium temperature is equal to the room temperature, and is higher than $T_{comp.2}$, the TM spin is stronger than the RE spin, and hence, the spin state is shown in Fig. 11(4A). The first layer is left in the recorded state. Therefore, the present condition corresponds to CONDITION 1 or 2 in Fig. 22. This condition is held until a time immediately before recording. In this case, the bias field Hb is applied in the "non-A direction" ↓.

— Low-temperature Cycle —

A low-level laser beam is irradiated to increase the medium temperature to $T_L$. Since $T_L$ is almost equal to the Curie temperature $T_{C1}$ of the recording/reproduction first layer, magnetization of the first layer disappears. In this state, since $H_{C2}$ of the second layer is still large at this temperature, the magnetization ⇑ of the second layer will not be reversed by ↓ Hb. This condition corresponds to CONDITION 3 in Fig. 22.

When the irradiated portion falls outside the spot region of the laser beam in CONDITION 3, the medium temperature begins to fall. When the medium temperature is decreased slightly below $T_{C1}$, the RE and TM spins of the second layer shown in Fig. 11(4A) influence those of the first layer through the exchange coupling force.

The exchange coupling force acts to respectively align RE spins (↓) and TM spins (↑) , and the spin state shown in Fig. 11(3A) appears in the first layer. As a result, "non-A-directed" ⇓ magnetization shown in Fig. 11(3B) appears in the first layer. This condition corresponds to CONDITION 4 in Fig. 22.

CONDITION 4 is maintained after the medium temperature is decreased to the room temperature. As a result, the magnetization of the first layer is aligned in the "non-A direction" ⇓ regardless of the previously recorded bit, and a bit in the "non-A direction" ⇓ is formed.

— High-temperature Cycle —

A high-level beam is irradiated. As a result, when the medium temperature is increased to $T_L$, since $T_L$ is almost equal to the Curie temperature $T_{C1}$ of the first layer, the magnetization of the first layer disappears. This condition corresponds to CONDITION 5 in Fig. 22.

When the beam irradiation further continues and the medium temperature reaches $T_H$, since the temperature $T_H$ of the second layer is almost equal to $T_{C2}$, the magnetization of the second layer also disappears. This condition corresponds to CONDITION 6.

When the irradiated portion falls outside the spot region of the laser beam in CONDITION 6, the medium temperature begins to fall. When the medium temperature is decreased slightly below $T_{C2}$, magnetization appears in the second layer. In this case, "non-A-directed" ⇓ magnetization appears due to ↓ Hb. Since the medium temperature is higher than $T_{comp.2}$, the TM spin is stronger than the RE spin, and the spin state shown in Fig. 11(2A) is established. However, since the temperature is higher than $T_{C1}$, no magnetization appears in the first layer. This condition corresponds to CONDITION 7 in Fig. 22.

When the medium temperature is further decreased slightly below $T_{C1}$, magnetization also appears in the first layer. In this case, the exchange coupling force from the second layer acts to respectively align RE spins (↑) and TM spins (↓) . In this case, since the medium temperature is lower than $T_{comp.1}$, the RE spin is stronger than the TM spin, and the spin state shown in Fig. 11(1A) is established. For this reason, "A-directed" ⇑ magnetization shown in Fig. 11(1B) appears against ↓ Hb. This condition corresponds to CONDITION 8 in Fig. 22.

The medium temperature is then decreased from the temperature in CONDITION 8 to the room temperature. Since $H_{C1}$ at the room temperature is sufficiently large, the magnetization of the first layer is stably held. Thus, a bit in the "A direction" ⇑ is formed.

[Description of Class 7]

The principle of the overwrite operation will be described in detail below using a specific medium No. 7 belonging to a recording medium of Class 7 (P type, Quadrant III, Type 4) shown in Table 1.

This medium No. 7 has a relation given by Formula 41:

$$T_R < T_{C1} \approx T_L < T_{C2} \approx T_H \quad \text{Formula} \quad 41$$

Fig. 19 shows this relation as a graph.

A condition for reversing only the magnetization of the second layer by the initial field Hini. without reversing that of the first layer at the room temperature $T_R$ is given by Formula 42. This medium No. 7 satisfies Formula 42:

$$H_{C1} > H_{C2} + \frac{\sigma_w}{2M_{S1}t_1} + \frac{\sigma_w}{2M_{S2}t_2} \quad \text{Formula} \quad 42$$

In this case, a condition for Hini. is represented by Formula 45. When Hini. disappears, the reversed magnetization of the second layer is influenced by that of the first layer through the exchange coupling force. Conditions for maintaining the magnetization of the second layer without re-reversing it are given by Formulas 43 and 44. This medium No. 7 satisfies Formulas 43 and 44:

$$H_{C1} > \frac{\sigma_w}{2M_{S1}t_1} \quad \text{Formula} \quad 43$$

$$H_{C2} > \frac{\sigma_w}{2M_{S2}t_2} \quad \text{Formula} \quad 44$$

$$H_{C2} + \frac{\sigma_w}{2M_{S2}t_2} < |Hini.| < H_{C1} - \frac{\sigma_w}{2m_{S1}t_1} \quad \text{Formula} \quad 45$$

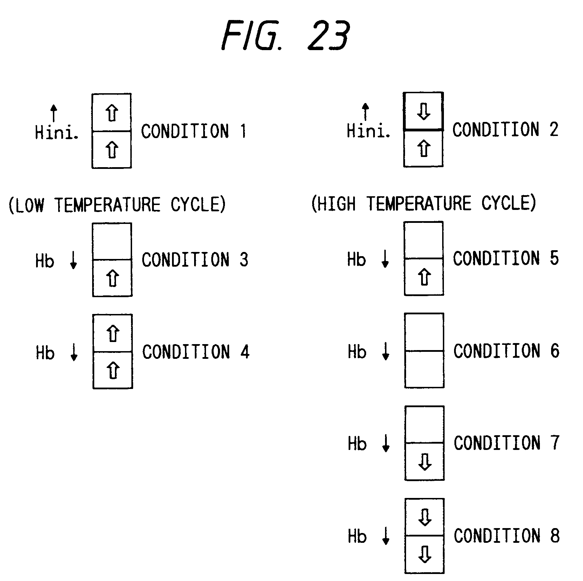

Magnetization of the second layer of the recording medium which satisfies the conditions given by Formulas 42 to 44 at the room temperature is aligned in, e.g., the "A direction" ⇑ by Hini. satisfying a condition given by Formula 45 before a time immediately before recording. In this case, since the medium temperature is equal to the room temperature, and is higher than $T_{comp.2}$, the TM spin is stronger thant the RE spin. For this reason, the spin state shown in Fig. 11(4A) is formed. The first layer is left in the previous recorded state, and the present condition corresponds to CONDITION 1 or 2 shown in Fig. 23. This condition is held until a time immediately before recording. In this case, the bias field Hb is applied in the "non-A direction" ↓.

— Low-temperature Cycle —

A low-level laser beam is irradiated to increase the medium temperature to $T_L$. Since $T_L$ is almost equal to the Curie temperature $T_{C1}$ of the first layer, magnetization of the first layer disappears. In this state, since $H_{C2}$ is still large at this temperature, the magnetization ⇑ of the second layer will not be reversed by ↓ Hb. This condition corresponds to CONDITION 3 in Fig. 23.

When the irradiated portion falls outside the spot region of the laser beam in CONDITION 3, the medium temperature begins to fall. When the medium temperature is decreased slightly below $T_{C1}$, magnetization appears in the first layer. In this case, the RE and TM spins of the second layer shown in Fig. 11(4A) influence those of the first layer through the exchange coupling force. More specifically, the exchange coupling force acts to respectively align RE spins (↓) and TM spins ( ⇡ ) · As a result, the spin state shown in Fig. 11(4A) appears in the first layer. More specifically, "A-directed" ⇑ magnetization shown in Fig. 11(4B) appears in the first layer against ↓ Hb. Fig. 23 shows this condition as CONDITION 4.

CONDITION 4 is maintained after the medium temperature is decreased to the room temperature. As a result, the magnetization of the first layer is aligned in the "A direction" ⇑ regardless of the previously recorded bit, and a bit in the "A direction" ⇑ is formed.

— High-temperature Cycle —

A high-level beam is irradiated. As a result, when the medium temperature is increased to $T_L$, since $T_L$ is almost equal to the Curie temperature $T_{C1}$ of the first layer, the magnetization of the first layer disappears. This condition corresponds to CONDITION 5 in Fig. 23.

When the beam irradiation further continues and the medium temperature reaches $T_H$, since the temperature $T_H$ of the second layer is almost equal to the Curie temperature $T_{C2}$, the magnetization of the second layer also disappears. This condition corresponds to CONDITION 6 in Fig. 23.

When the irradiated portion falls outside the spot region of the laser beam in CONDITION 6, the medium temperature begins to fall. When the medium temperature is decreased slightly below $T_{C2}$, magnetization appears in the second layer. In this case, "non-A-directed" magnetization $\Downarrow$ appears due to $\downarrow$ Hb. Since the medium temperature is higher than $T_{comp.2}$, the TM spin is stronger than the RE spin, and hence, the spin state shown in Fig. 11(2A) is formed. However, since the temperature is still higher than $T_{C1}$, no magnetization appears in the first layer. This condition corresponds to CONDITION 7 in Fig. 23.

When the medium temperature is further decreased slightly below $T_{C1}$, magnetization appears in the first layer. In this case, the exchange coupling force from the second layer acts to respectively align RE spins ($\uparrow$)

and TM spins $( \dot{\downarrow} )$ . For this reason, the spin state shown in Fig. 11(2A) appears in the first layer, and "non-

A-directed" $\Downarrow$ magnetization shown in Fig. 11(2B) appears. Fig. 23 shows this condition as CONDITION 8.

The medium temperature is then decreased from the temperature in CONDITION 8 to the room temperature. Since $H_{C1}$ at the room temperature is sufficiently large, the magnetization of the first layer is stably held.

Thus, a bit in the "non-A direction" $\Downarrow$ is formed.

[Description of Class 8]

The principle of the overwrite operation will be described in detail below using a specific medium No. 8 belonging to a recording medium of Class 8 (A type, Quadrant IV, Type 2) shown in Table 1.

This medium No. 8 has a relation given by Formula 46:

$$T_R < T_{C1} \approx T_L \approx T_{comp.2} < T_{C2} \approx T_H \quad \text{Formula} \quad 46$$

Fig. 15 shows this relation as a graph.

A condition for reversing only the magnetization of the second layer by the initial field Hini. without reversing that of the first layer at the room temperature $T_R$ is given by Formula 47. This medium No. 8 satisfies Formula 47 at the room temperature:

$$H_{C1} > H_{C2} + \left| \frac{\sigma_w}{2M_{S1}t_1} - \frac{\sigma_w}{2M_{S2}t_2} \right| \qquad \text{...Formula} \quad 47$$

In this case, a condition for Hini. is represented by Formula 50. When Hini. disappears, the reversed magnetization of the second layer is influenced by that of the first layer through the exchange coupling force. Conditions for maintaining the magnetization of the second layer without re-reversing it are given by Formulas 48 and 49. This medium No. 8 satisfies Formulas 48 and 49:

$$H_{C1} > \frac{\sigma_w}{2M_{S1}t_1} \quad \text{Formula} \quad 48$$

$$H_{C2} > \frac{\sigma_w}{2M_{S2}t_2} \quad \text{Formula} \quad 49$$

$$H_{C2} + \frac{\sigma_w}{2M_{S2}t_2} < |Hini.| < H_{C1} + \frac{\sigma_w}{2M_{S1}t_1} \quad \text{Formula} \quad 50$$

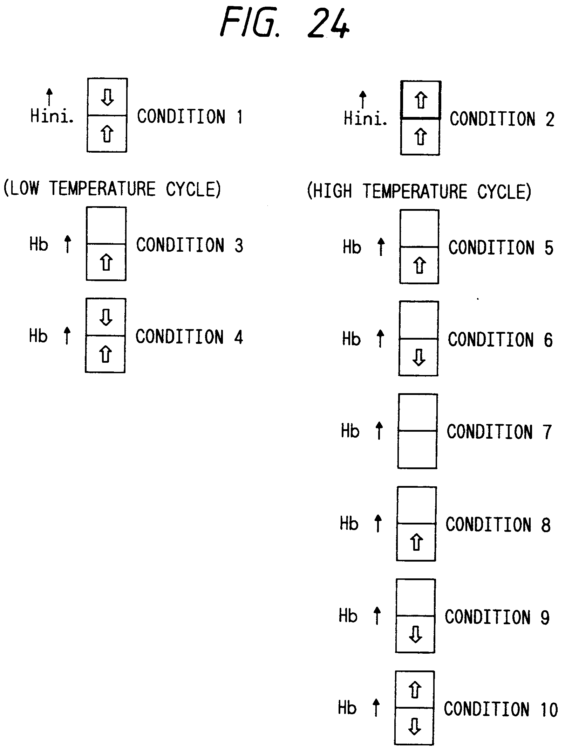

Magnetization of the second layer of the recording medium which satisfies the conditions given by Formulas 47 to 49 at the room temperature is aligned in, e.g., the "A direction" $\Uparrow$ by Hini. satisfying a condition given by Formula 50 before a time immediately before recording. In this case, since the medium temperature is equal to the room temperature, and is lower than $T_{comp.2}$, the RE spin is stronger than the TM spin, and hence, the spin state shown in Fig. 11(1A) is formed. Since the first layer is left in the previous recorded state, the present condition corresponds to CONDITION 1 or 2 shown in Fig. 24. This condition is held until a time immediately before recording. In this case, the bias field Hb is applied in the "A direction" $\uparrow$.

— Low-temperature Cycle —

A low-level laser beam is irradiated to increase the medium temperature to $T_L$. Since $T_L$ is almost equal to the Curie temperature $T_{C1}$ of the first layer, magnetization of the first layer disappears. However, since $H_{C2}$ of the second layer is still large at this temperature, the magnetization of the second layer will not be reversed by ↑ Hb. Fig. 24 shows this condition as CONDITION 3.

When the irradiated portion falls outside the spot region of the laser beam in CONDITION 3, the medium temperature begins to fall. When the medium temperature is decreased slightly below $T_{C1}$, magnetization appears in the first layer. In this case, the RE and TM spins of the second layer shown in Fig. 11(1A) influence those of the first layer through the exchange coupling force. More specifically, a force acts to respectively align RE spins (↑) and TM spins ( ↓ ) ⋅ In this case, since the medium temperature is higher than $T_{comp.1}$, the TM spin is stronger than the RE spin. As a result, the spin state shown in Fig. 11(2A) appears in the first layer, and "non-A-directed" ⇓ magnetization shown in Fig. 11(2B) appears against ↑ Hb. Fig. 24 shows this condition as CONDITION 4.

CONDITION 4 is maintained after the medium temperature is decreased to the room temperature. As a result, the magnetization of the first layer is aligned in the "non-A direction" ⇓ regardless of the previously recorded bit, and a bit in the "non-A direction" ⇓ is formed in the first layer.

— High-temperature Cycle —

A high-level laser beam is irradiated. As a result, when the medium temperature is increased to $T_L$, since $T_L$ is almost equal to the Curie temperature $T_{C1}$ of the first layer, magnetization of the first layer disappears. This condition corresponds to CONDITION 5 in Fig. 24.

When beam irradiation is further continued, and the medium temperature slightly exceeds $T_{comp.2}$, the relationship between the strengths of RE and TM spins is reversed although the directions of the RE spin (↑) and the TM spin ( ↓ ) are left unchanged, and the spin state transits from Fig. 11(1A) to Fig. 11(2A). As a result, the magnetization of the second layer is reversed to the "non-A direction" ⇓ . This condition corresponds to CONDITION 6 in Fig. 24.

However, since $H_{C2}$ is still large at this temperature, the magnetization ⇓ of the second layer will not be reversed by ↑ Hb. Assume that the beam radiation further continues, and the temperature is further increased and reaches $T_H$. Since $T_H$ is almost equal to $T_{C2}$, the magnetization of the second layer also disappears. This condition corresponds to CONDITION 7.

When the irradiated portion falls outside the spot region of the laser beam in CONDITION 7, the medium temperature begins to fall. When the medium temperature is decreased slightly below $T_{C2}$, magnetization appears in the second layer. In this case, "A-directed" ⇑ magnetization appears due to ↑ Hb. In this case, since the medium temperature is higher than $T_{comp.2}$, the TM spin is stronger than the RE spin, and the spin state shown in Fig. 11(4A) is formed. However, since the temperature is still higher than $T_{C1}$, no magnetization appears in the first layer. Fig. 24 shows this condition as CONDITION 8.

When the medium temperature is further decreased slightly below $T_{comp.2}$, the relationship between the strengths of RE and TM spins is reversed although the directions of the RE spin (↓) and the TM spin ( ↑ ) are left unchanged, and the spin state transits from Fig. 11(4A) to Fig. 11(3A). As a result, the magnetization of the second layer is reversed to the "non-A direction" ⇓ ⋅ In this condition, since $H_{C2}$ has already been considerably large, the magnetization ⇓ of the second layer will not be reversed by ↑ Hb. Since the temperature is still higher than $T_{C1}$, no magnetization appears in the first layer yet. This condition corresponds to CONDITION 9 in Fig. 24.

When the temperature is further decreased slightly below $T_{C1}$, magnetization also appears in the first layer. In this case, the second layer having the spin state shown in Fig. 11(3A) influences the first layer through the exchange coupling force. More specifically, a force acts to respectively align the RE spins (↓) and TM spins

( ↑ ) ⋅ As a result, the spin state shown in Fig. 11(4A) appears in the first layer, and "A-directed" ⇑ magnetization shown in Fig. 11(4B) appears. Fig. 24 shows this condition as CONDITION 10.

The medium temperature is then decreased from the temperature in CONDITION 10 to the room temperature. Since $H_{C1}$ at the room temperature is sufficiently large, the magnetization of the first layer is stably held. Thus, a bit in the "A direction" $\Uparrow$ is formed.

[Description of Class 9]

The principle of the overwrite operation will be described in detail below using a specific medium No. 9 belonging to a recording medium of Class 9 (A type, Quadrant IV, Type 4) shown in Table 1.

This medium No. 9 has a relation given by Formula 51:

$$T_R < T_{C1} \approx T_L < T_{C2} \approx T_H \quad \text{Formula} \quad 51$$

Fig. 19 shows this relation as a graph.

A condition for reversing only the magnetization of the second layer by the initial field Hini. without reversing that of the first layer at the room temperature $T_R$ is given by Formula 52. This medium No. 9 satisfies Formula 52:

$$H_{C1} > H_{C2} + \left| \frac{\sigma_w}{2M_{S1}t_1} - \frac{\sigma_w}{2M_{S2}t_2} \right| \qquad \text{...Formula} \quad 52$$

In this case, a condition for Hini. is represented by Formula 55. When Hini. disappears, the reversed magnetization of the second layer is influenced by that of the first layer through the exchange coupling force. Conditions for maintaining the magnetization of the second layer without re-reversing it are given by Formulas 53 and 54. This medium No. 9 satisfies Formulas 53 and 54:

$$H_{C1} > \frac{\sigma_w}{2M_{S1}t_1} \quad \text{Formula} \quad 53$$

$$H_{C2} > \frac{\sigma_w}{2M_{S2}t_2} \quad \text{Formula} \quad 54$$

$$H_{C2} + \frac{\sigma_w}{2M_{S2}t_2} < |Hini.| < H_{C1} + \frac{\sigma_w}{2M_{S1}t_1} \quad \text{Formula} \quad 55$$

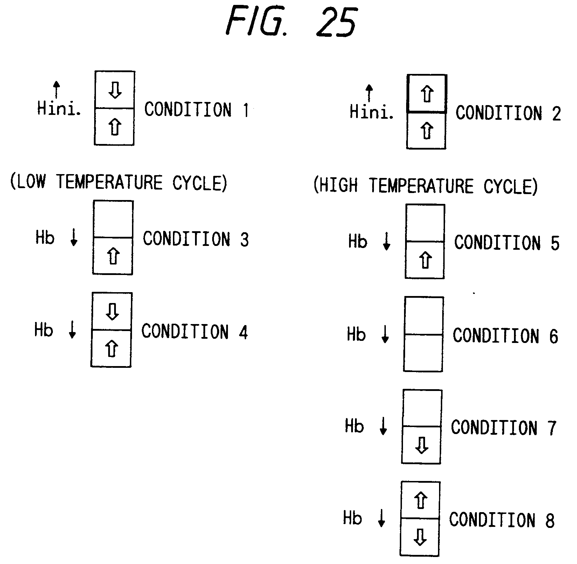

Magnetization of the second layer of the recording medium which satisfies the conditions given by Formulas 52 to 54 at the room temperature is aligned in, e.g., the "A direction" $\Uparrow$ by Hini. satisfying a condition given by Formula 55 before a time immediately before recording. In this case, since the medium temperature is equal to the room temperature, and is higher than $T_{comp.2}$, the TM spin is stronger than the RE spin, and hence, the spin state shown in Fig. 11(1A) is formed. The first layer is left in the previous recorded state, and the magnetization condition is shown in CONDITION 1 or 2 in Fig. 25. This condition is held until a time immediately before recording. In this case, the bias field Hb is applied in the "non-A direction" $\downarrow$.

— Low-temperature Cycle —

A low-level laser beam is irradiated to increase the medium temperature to $T_L$. Since $T_L$ is almost equal to the Curie temperature $T_{C1}$ of the first layer, magnetization of the first layer disappears. In this state, since $H_{C2}$ is still large at this temperature, the magnetization $\Uparrow$ of the second layer will not be reversed by $\downarrow$ Hb. This condition corresponds to CONDITION 3 in Fig. 25.

When the irradiated portion falls outside the spot region of the laser beam in CONDITION 3, the medium temperature begins to fall. When the medium temperature is decreased slightly below $T_{C1}$, magnetization appears in the first layer. In this case, the second layer having the spin state shown in Fig. 11(1A) influences the spins of the first layer through the exchange coupling force. More specifically, the exchange coupling force acts to respectively align RE spins ($\uparrow$) and TM spins ($\downarrow$). In this case, since the medium temperature is higher than $T_{comp.1}$, the TM spin is stronger than the RE spin. As a result, the spin state shown in Fig. 11(2A) appears in the first layer, and "non-A-directed" $\downarrow$ magnetization shown in Fig. 11(2B) appears against $\uparrow$ Hb. This condition corresponds to CONDITION 4 in Fig. 24.

CONDITION 4 is maintained after the medium temperature is decreased to the room temperature. As a result, the magnetization of the first layer is aligned in the "non-A direction" $\downarrow$ regardless of the previously recorded bit, and a bit in the "non-A direction" ↓ is formed in the first layer.

— High-temperature Cycle —

A high-level beam is irradiated. As a result, when the medium temperature is increased to $T_L$, since $T_L$ is almost equal to the Curie temperature $T_{C1}$ of the first layer, the magnetization of the first layer disappears. This condition corresponds to CONDITION 5 in Fig. 25.

When the beam irradiation further continues and the medium temperature reaches $T_H$, since the temperature $T_H$ of the medium, in particular, of the second layer, is almost equal to $T_{C2}$, the magnetization of the second layer also disappears. This condition corresponds to CONDITION 6.

When the irradiated portion falls outside the spot region of the laser beam in CONDITION 6, the medium temperature begins to fall. When the medium temperature is decreased slightly below $T_{C2}$, magnetization appears in the second layer. In this case, "non-A-directed" ↓ magnetization appears due to ↓ Hb. Since the medium temperature is lower than $T_{comp.2}$, the RE spin is stronger than the TM spin. For this reason, the spin state shown in Fig. 11(3A) is formed. However, since this temperature is still higher than $T_{C1}$, no magnetization appears in the first layer. This condition corresponds to CONDITION 7 in Fig. 25.

When the medium temperature is further decreased slightly below $T_{C1}$, magnetization appears in the first layer. In this case, the second layer having the spin state shown in Fig. 11(3A) influences the spins of the first layer through the exchange coupling force. That is, the exchange coupling force acts to respectively align RE spins (↓) and TM spins ( ↕ ) · In this case, since the medium temperature is higher than $T_{comp.1}$, the TM spin is stronger than the RE spin. For this reason, the spin state shown in Fig. 11(4A) appears in the first layer, and "A-directed" ⇑ magnetization appears against ↓ Hb. This condition corresponds to CONDITION 8.

The medium temperature is then decreased from the temperature in CONDITION 8 to the room temperature. Since $H_{C1}$ at the room temperature is sufficiently large, the magnetization of the first layer is stably held. Thus, a bit in the "A direction" ⇑ is formed.

In the descriptions of Classes 1 to 9, both the high- and low-temperature cycles are executed near the Curie temperature. However, since these cycles can be executed at a temperature lower than the Curie temperature, this example will be explained below using some classes. Although the same execution method can be applied to the remaining classes, a description thereof will be omitted for the sake of simplicity.

[Description of Another Example of Class 1]

The principle of an overwrite operation will be described in detail below using a medium No. 1-2 belonging to a recording medium of Class 1 (P type, Quadrant I, Type 1) shown in Table 1.

The medium No. 1-2 satisfies Formula 11-2:

$$T_R < T_{comp.1} < T_L < T_H \leqq T_{C1} \leqq T_{C2} \quad \text{Formula} \quad 11\text{-}2$$

and also satisfies Formula 11-3:

$$T_{comp.2} < T_{C1} \quad \text{Formula} \quad 11\text{-}3$$

In this specification, "=" of symbol "≦" need not always mean "equal to" in the strict sense, and may include a meaning of "almost equal to".

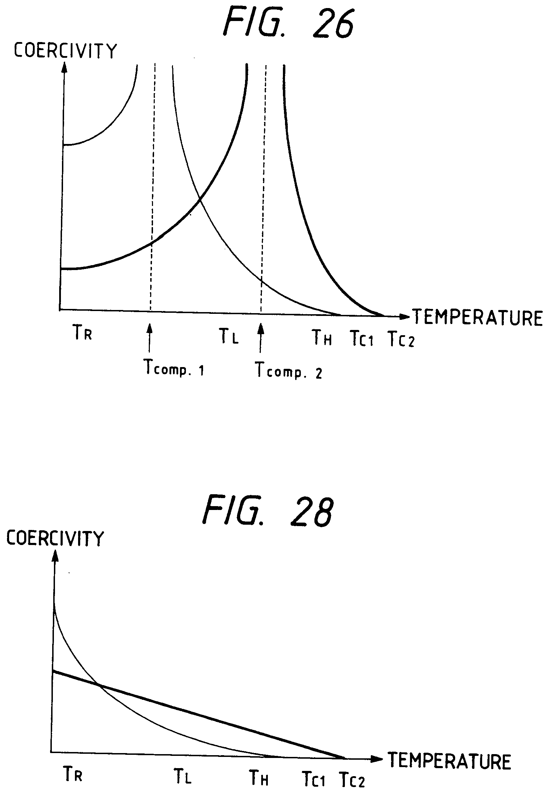

For the sake of simplicity, a medium having a relation of $T_H < T_{C1} < T_{C2}$ will be described below. The temperature $T_{comp.2}$ may be higher than, equal to, or lower than $T_L$. For the sake of simplicity, $T_{comp.2}$ is set to satisfy $T_L < T_{comp.2}$ in the following description. Fig. 26 shows the above-mentioned relationship as a graph. Note that thin curves represent characteristics of the first layer, and bold curves represent those of the second layer.

A condition that reverses the direction of magnetization of the second layer without reversing that of the first layer (recording layer) by the initial field Hini. at the room temperature $T_R$ is represented by Formula 12. This medium No. 1-2 satisfies Formula 12:

$$H_{C1} > H_{C2} + \frac{\sigma_w}{2M_{S1}t_1} + \frac{\sigma_w}{2m_{S2}t_2} \quad \text{Formula} \quad 12$$

At this time, a condition for Hini. is represented by Formula 15. If Hini. disappears, the directions of magnetization of the first and second layers are influenced to each other through the interface wall energy. The conditions that can hold the directions of magnetization of the first and second layers without reversing them are represented by Formulas 13 and 14. The medium No. 1-2 satisfies Formulas 13 and 14:

$$H_{C1} > \frac{\sigma_w}{2M_{S1}t_1} \quad \text{Formula} \quad 13$$

$$H_{C2} > \frac{\sigma_w}{2M_{S2}t_2} \quad \text{Formula} \quad 14$$

The magnetization of the second layer of the recording medium which satisfies conditions given by Formulas 12 to 14 at the room temperature is aligned in, e.g., the "A direction" ⇑ by Hini. which satisfies following Formula 15 before a time immediately before recording:

$$H_{C2} + \frac{\sigma_w}{2M_{S2}t_2} < |Hini.| < H_{C1} - \frac{\sigma_w}{2M_{S1}t_1} \quad \text{Formula} \quad 15$$

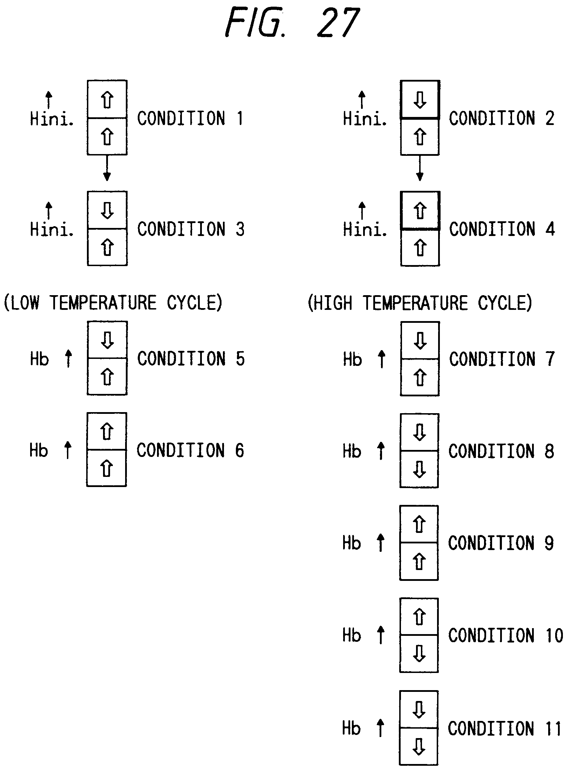

Since the medium temperature is equal to the room temperature, and is lower than $T_{comp.2}$, the RE spin is stronger than the TM spin. For this reason, the spin state shown in Fig. 11(1A) is formed. At this time, the first layer is left in the previous recorded state. Fig. 27 shows this condition as CONDITION 1 or 2. In Fig. 27, a bold line represents an interface wall (the same applies to the subsequent drawings). CONDITION 1 or 2 is held until a time immediately before recording. The bias field Hb is applied in the "A direction" ↑.

Note that it is difficult to focus the bias field Hb to the same range as a irradiation region (spot region) of the laser beam as well as normal magnetic fields. When a medium has a disk shape, recorded information (bit) is influenced by the field Hini. during one revolution, and CONDITION 1 or 2 appears again. The bit then passes a portion near the laser beam irradiation region (spot region). At this time, the bit in CONDITION 1 or 2 is influenced by a bias field Hb apply means since the bit approaches it. In this case, if the direction of magnetization of the first layer of the bit in CONDITION 2 having the direction of magnetization opposite to that of Hb is reversed by Hb, information which has been recorded one revolution before is lost. A condition for preventing this is given by:

$$H_{C1} > Hb + \frac{\sigma_w}{2M_{S1}t_1} \quad \text{Formula} \quad 15\text{-}2$$

The disk-like medium must satisfy this formula at the room temperature. In other words, a condition for determining Hb is expressed by Formula 15-2.

And then, the bit in CONDITION 1 or 2 reaches the spot region of the laser beam. The laser beam intensity has two levels, i.e., high and low levels.

— Low-temperature Cycle —

A low-level laser beam is irradiated, and a medium temperature is increased beyond $T_{comp.1}$. Thus, the medium type is shifted from P type to A type. Although the directions of the RE and TM spins of the first layer are left unchanged, the relationship between their strengths is reversed. As a result, the direction of magnetization of the first layer is reversed. Thus, the bit in CONDITION 1 in Fig. 27 transits to CONDITION 3 in Fig. 27, or the bit in CONDITION 2 in Fig. 27 transits to CONDITION 4 in Fig. 27.

The laser beam is kept irradiated, and the medium temperature then reaches $T_{LS}$. Thus, Formulas 10-2 and 10-3 are simultaneously satisfied. As a result, even if Hb ↑ is present, CONDITION 4 transits to CONDITION 5. Meanwhile, since CONDITION 3 remains the same regardless of Hb ↑, it becomes the same CONDITION 5.

When the irradiated portion falls outside the spot region of the laser beam in CONDITION 5, the medium temperature begins to be decreased. When the medium temperature is decreased below $T_{comp.1}$, the medium type is restored from A type to original P type. The relationship between the strengths of the RE and TM spins of the first layer is reversed, and the spin state transits from Fig. 11(2A) to Fig. 11(1A). As a result, the direction of magnetization of the first layer is reversed to the "A direction" ⇑ shown in Fig. 11(1B). This condition corresponds to CONDITION 6 in Fig. 27. CONDITION 6 is held after the medium temperature is decreased to the room temperature.

As a result, a bit in the "A direction" ⇑ is formed in the first layer.

— High-temperature Cycle —

When a high-level laser beam is irradiated, the medium temperature is increased to the low temperature $T_{LS}$ via $T_{comp.1}$. As a result, the same CONDITION 7 in Fig. 27 as CONDITION 5 in Fig. 27 is established.

Upon irradiation of the high-level laser beam, the medium temperature is further increased. When the medium temperature exceeds $T_{comp.2}$ of the second layer, the medium type is shifted from A type to P type. At the same time, although the directions of the RE and TM spins of the second layer are left unchanged, the relationship between their strengths is reversed, and the spin state transits from Fig. 11(1A) to Fig. 11(2A). For this reason, the direction of magnetization of the second layer is reversed, i.e., the "non-A-directed" $\downarrow$ magnetization appears. This condition corresponds to CONDITION 8.

However, since $H_{C2}$ is still large at this temperature, the magnetization of the second layer will not be reversed by $\uparrow$ Hb. When the medium temperature is further increased and reaches $T_H$, the coercivities of the first and second layers are decreased since $T_H$ is near the Curie temperature. As a result, the medium satisfies one of conditions (1) to (3) given by the following formulas:

(1) $\quad |H_{C1} - H_{C2}| < \dfrac{\sigma_w}{2M_{S1}t_1} + \dfrac{\sigma_w}{2M_{S2}t_2}$

and $Hb > \dfrac{M_{S1}t_1 H_{C1} + M_{S2}t_2 H_{C2}}{M_{S1}t_1 + M_{S2}t_2}$

(2) $\quad Hb > H_{C1} + \dfrac{\sigma_w}{2M_{S1}t_1}$

and $Hb > H_{C2} - \dfrac{\sigma_w}{2M_{S2}t_2}$

(3) $\quad Hb > H_{C1} - \dfrac{\sigma_w}{2M_{S1}t_1}$

and $Hb > H_{C2} + \dfrac{\sigma_w}{2M_{S2}t_2}$

For this reason, the directions of magnetization of the two layers are reversed at almost the same time, and follow the direction of Hb $\uparrow$. This condition corresponds to CONDITION 9 in Fig. 27.

When the irradiated portion falls outside the spot region of the laser beam in CONDITION 9, the medium temperature begins to fall. When the medium temperature is decreased below $T_{comp.2}$, the medium type is shifted from P type to A type. Although the directions of the RE and TM spins are left unchanged, the relationship between their strengths of the RE and TM spins of the first layer is reversed, and the spin state transits from Fig. 11(4A) to Fig. 11(3A). As a result, the direction of magnetization of the second layer is reversed, i.e., "non-A-directed" $\downarrow$ magnetization shown in Fig. 11(3B) appears. This condition corresponds to CONDITION 10.

When the medium temperature is further decreased from the temperature in CONDITION 10 to a temperature below $T_{comp.1}$, the medium type is restored from A type to original P type. At the same time, the relationship between the strengths of the RE and TM spins of the first layer is then reversed, and the spin state transits from Fig. 11(4A) to Fig. 11(3A). As a result, the direction of magnetization of the first layer is reversed, and "non-A-directed" $\downarrow$ magnetization shown in Fig. 11(3B) appears. This condition corresponds to CONDITION 11.

The medium temperature is then decreased from the temperature in CONDITION 11 to the room temperature. Since $H_{C1}$ at the room temperature is sufficiently large, and Formula 15-3 is satisfied, the magnetization $\downarrow$ of the first layer will not be reversed by $\uparrow$ Hb, and CONDITION 11 is maintained.

$$Hb < H_{C1} + \dfrac{\sigma_w}{2M_{S1}t_1} \qquad \text{Formula} \quad 15\text{-}3$$

In this manner, a bit in the "non-A direction" $\downarrow$ is formed in the first layer.

[Description of Another Example of Class 4]

The principle of the overwrite operation will be described in detail below using a medium No. 4-2 belonging to a recording medium of Class 4 (P type, Quadrant I, Type 4) shown in Table 1.

This medium No. 4-2 has a relation given by Formula 26-2:

$$T_R < T_L < T_H \leqq T_{C1} \leqq T_{C2} \qquad \text{Formula} \quad 26\text{-}2$$

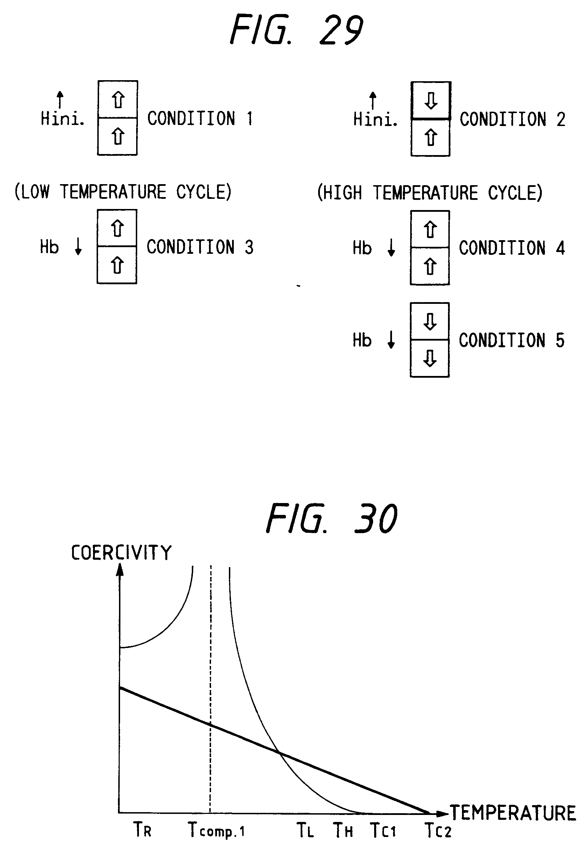

For the sake of simplicity, $T_H < T_{C1} < T_{C2}$ in the following description. Fig. 28 shows this relation as a graph.

A condition for reversing only the direction of magnetization of the second layer by the initial field Hini. at the room temperature $T_R$ without reversing that of the first layer is represented by Formula 27. The medium No. 4-2 satisfies Formula 27:

$$H_{C1} > H_{C2} + \dfrac{\sigma_w}{2M_{S1}t_1} + \dfrac{\sigma_w}{2M_{S2}t_2} \qquad \text{Formula} \quad 27$$

In this case, a condition for Hini. is represented by Formula 30. When Hini. disappears, the directions of magnetization of the first and second layers are influenced through the exchange coupling force. Conditions for maintaining the directions of magnetization of the first and second layers without reversing them are given by Formulas 28 and 29. This medium No. 4-2 satisfies Formulas 28 and 29:

$$H_{C1} > \frac{\sigma_w}{2M_{S1}t_1} \quad \text{Formula} \quad 28$$

$$H_{C2} > \frac{\sigma_w}{2M_{S2}t_2} \quad \text{Formula} \quad 29$$

The magnetization of the second layer of the recording medium which satisfies the conditions given by Formulas 27 to 29 at the room temperature is aligned in, e.g., the "A direction" ⇑ by Hini. which satisfies Formula 30 before a time immediately before recording:

$$H_{C2} + \frac{\sigma_w}{2M_{S2}t_2} < |Hini.| < H_{C1} - \frac{\sigma_w}{2M_{S1}t_1} \quad \text{Formula} \quad 30$$

In this case, since the medium temperature is equal to the room temperature, and is lower than $T_{comp.2}$, the RE spin is stronger than the TM spin. The spin state is shown in Fig. 11(1A). On the other hand, the first layer is left in the previous recorded state. Therefore, the directions of magnetization correspond to those shown in CONDITION 1 or 2 in Fig. 29. CONDITION 1 or 2 is maintained until a time immediately before recording.

The bias field Hb is assumed to be applied in the "non-A direction" ↓.

When the medium has a disk shape, a condition for inhibiting magnetization of a recorded bit (in particular, a bit in CONDITION 2 in which the direction of magnetization of the first layer is opposite to the direction of Hb) from being reversed by Hb when it approaches an Hb apply means is represented by Formula 30-2:

$$Hb < H_{C1} + \frac{\sigma_w}{2M_{S1}t_1} \quad \text{Formula} \quad 30-2$$

The disk medium must satisfy this formula at the room temperature. A condition for inhibiting the "initialized" second layer from being reversed by Hb when it approaches the Hb apply means is represented by Formula 30-3:

$$Hb < H_{C2} - \frac{\sigma_w}{2M_{S2}t_2} \quad \text{Formula} \quad 30-3$$

In other words, conditions for determining Hb are Formulas 30-2 and 30-3.

And then, the bit in CONDITION 1 or 2 reaches the spot region of the laser beam. The laser beam intensity has two levels, i.e., high and low levels.

— Low-temperature Cycle —

A low-level laser beam is irradiated, and the medium temperature is increased to $T_{LS}$. Thus, Formulas 10-2 and 10-3 are simultaneously satisfied. As a result, CONDITION 2 in Fig. 29 transits to CONDITION 3. On the other hand, since CONDITION 1 is left unchanged, it becomes the same CONDITION 3.

In CONDITION 3 in Fig. 29, when the irradiated portion falls outside the spot region of the laser beam, the medium temperature begins to be decreased. Even when the medium temperature is decreased to the room temperature, CONDITION 3 is maintained since $H_{C1}$ at the room temperature is sufficiently large (see Formula 30-4).

$$Hb < H_{C1} + \frac{\sigma_w}{2M_{S1}t_1} \quad \text{Formula} \quad 30-4$$

As a result, a bit in the "A direction" ⇑ is formed in the first layer.

— High-temperature Cycle —

When a high-level laser beam is irradiated, the medium temperature is increased to the low temperature $T_{LS}$. As a result, CONDITION 4 equal to CONDITION 3 in Fig. 29 in the low-temperature cycle is established.

When the beam irradiation continues and the medium temperature is further increased up to $T_H$, the coercivities are decreased since $T_H$ is closer to the Curie temperatures of the first and second layers. As a result, the medium satisfies one of conditions (1) to (3) given by the following formulas:

(1)        $|H_{C1} - H_{C2}| < \frac{\sigma_w}{2M_{S1}t_1} + \frac{\sigma_w}{2M_{S2}t_2}$

and $Hb > \dfrac{M_{S1}t_1 H_{C1} + H_{S2}t_2 H_{C2}}{M_{S1}t_1 + M_{S2}t_2}$

(2) $\quad Hb > H_{C1} + \dfrac{\sigma_w}{2M_{S1}t_1}$

and $Hb > H_{C2} - \dfrac{\sigma_w}{2M_{S2}t_2}$

(3) $\quad Hb > H_{C1} - \dfrac{\sigma_w}{2M_{S1}t_1}$

and $Hb > H_{C2} + \dfrac{\sigma_w}{2M_{S2}t_2}$

For this reason, the directions of magnetization of the two layers are almost simultaneously reversed to follow the direction of Hb. This condition corresponds to CONDITION 5 in Fig. 29.

When the irradiated portion falls outside the spot region of the laser beam in CONDITION 5, the medium temperature is begins to be decreased. The medium temperature is then decreased to the room temperature. However, CONDITION 5 is left unchanged.

Thus, a bit in the "non-A direction" $\Downarrow$ is formed in the first layer.

[Description of Another Example of Class 5]

The principle of the overwrite operation will be described in detail below using a medium No. 5-2 belonging to a recording medium of Class 5 (A type, Quadrant II, Type 3) shown in Table 1.

This medium No. 5-2 has a relation given by Formula 31-2:

$$T_R < T_{comp.1} < T_L < T_H \leqq T_{C1} \leqq T_{C2} \quad \text{Formula} \quad 31\text{-}2$$

For the sake of simplicity, $T_H < T_{C1} < T_{C2}$ in the following description. Fig. 30 shows this relation as a graph.

A condition for reversing only the direction of magnetization of the second layer by the initial field Hini. at the room temperature $T_R$ without reversing that of the first layer is represented by Formula 32. This medium No. 5-2 satisfies Formula 32:

$$H_{C1} > H_{C2} + \left| \frac{\sigma_w}{2M_{S1}t_1} - \frac{\sigma_w}{2M_{S2}t_2} \right| \quad \ldots \text{Formula 32}$$

In this case, a condition for Hini. is represented by Formula 35. When Hini. disappears, the directions of magnetization of the first and second layers are influenced to each other through the interface wall energy. Conditions for maintaining the directions of magnetization of the first and second layers without reversing them are represented by Formulas 33 and 34. This medium No. 5-2 satisfies Formulas 33 and 34:

$$H_{C1} > \frac{\sigma_w}{2M_{S1}t_1} \quad \text{Formula} \quad 33$$

$$H_{C2} > \frac{\sigma_w}{2M_{S2}t_2} \quad \text{Formula} \quad 34$$

Magnetization of the second layer of the recording medium which satisfies the conditions given by Formulas 32 to 34 at the room temperature is aligned in, e.g., the "A direction" $\Uparrow$ by Hini. which satisfies Formula 35 before a time immediately before recording:

$$H_{C2} + \frac{\sigma_w}{2M_{S2}t_2} < | Hini. | < H_{C1} + \frac{\sigma_w}{2M_{S1}t_1} \quad \text{Formula} \quad 35$$

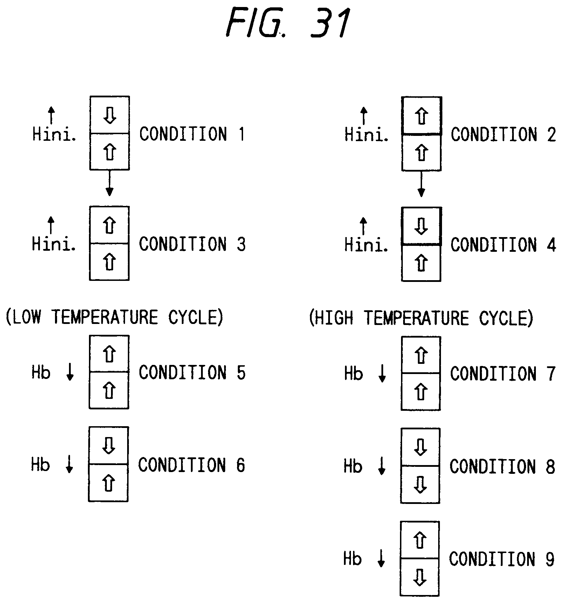

In this case, since the medium temperature is equal to the room temperature, and is higher than $T_{comp.2}$, the TM spin is stronger than the RE spin, and hence, the spin state shown in Fig. 11(4A) is formed. Since the first layer is left in the previous recorded state, the magnetization condition is represented by CONDITION 1 or 2 shown in Fig. 31. This CONDITION 1 or 2 is maintained until a time immediately before recording. The bias field Hb is assumed to be applied in the "non-A direction" $\downarrow$.

When the medium has a disk shape, a condition for inhibiting magnetization of a previously recorded bit (in particular, a bit in CONDITION 2 in which the direction of magnetization of the first layer is opposite to the direction of Hb) from being reversed by Hb when it approaches an Hb apply means is represented by Formula 35-2:

$$Hb < H_{C1} - \frac{\sigma_w}{2M_{S1}t_1} \quad \text{Formula} \quad 35\text{-}2$$

The disk medium must satisfy this formula at the room temperature. A condition for inhibiting the "initialized"

second layer from being reversed by Hb when it approaches the Hb apply means is represented by Formula 35-3:

$$Hb < H_{C2} - \frac{\sigma_w}{2M_{S2}t_2} \qquad \text{Formula 35-3}$$

In other words, conditions for determining Hb are Formulas 35-2 and 35-3.

And then, the bit in CONDITION 1 or 2 reaches the spot region of the laser beam. The laser beam intensity has two levels, i.e., high and low levels.

— Low-temperature Cycle —

A low-level laser beam is irradiated, and the medium temperature is increased beyond $T_{comp.1}$. The medium type is changed from A type to P type. At the same time, the relationship between the strengths of the RE and TM spins of the first layer is reversed although their directions are left unchanged. For this reason, the direction of magnetization of the first layer is reversed. As a result, the bit in CONDITION 1 in Fig. 31 transits to CONDITION 3, or the bit in CONDITION 2 in Fig. 31 transits to CONDITION 4.

When the medium temperature is further increased from this state up to $T_{LS}$, Formulas 10-2 and 10-3 are simultaneously satisfied. Thus, CONDITION 4 transits to CONDITION 5. Meanwhile, since CONDITION 3 is left unchanged, it becomes the same CONDITION 5.

When the irradiated portion falls outside the spot region of the laser beam in this condition, the medium temperature begins to be decreased. When the medium temperature is decreased below $T_{comp.1}$, the medium type is restored from P type to original A type. At the same time, the relationship between the strengths of RE and TM spins of the first layer is reversed, and the spin state transits from Fig. 11(4A) to Fig. 11(3A). As a result, the direction of magnetization of the first layer is reversed to the "non-A direction" ⇩ shown in Fig. 11(3B). This condition corresponds to CONDITION 6. The medium temperature is then decreased to the room temperature, and CONDITION 6 is maintained.

As a result, a bit in the "non-A direction" ⇩ is formed in the first layer.

— High-temperature Cycle —

When a high-level laser beam is irradiated, the medium temperature is increased to the low temperature $T_{LS}$ via $T_{comp.1}$. As a result, CONDITION 7 equal to CONDITION 5 in Fig. 31 is established.

The beam irradiation continues and the medium temperature then reaches $T_H$. The coercivities of the two layers are decreased since $T_H$ is closer to the Curie temperatures of the first and second layers. As a result, the medium satisfies one of following conditions (1) to (3):

(1)     $|H_{C1} - H_{C2}| < \dfrac{\sigma_w}{2M_{S1}t_1} + \dfrac{\sigma_w}{2M_{S2}t_2}$

and $Hb > \dfrac{M_{S1}t_1 H_{C1} + M_{S2}t_2 H_{C2}}{M_{S1}t_1 + M_{S2}t_2}$

(2)     $Hb > H_{C1} + \dfrac{\sigma_w}{2M_{S1}t_1}$

and $Hb > H_{C2} - \dfrac{\sigma_w}{2M_{S2}t_2}$

(3)     $Hb > H_{C1} - \dfrac{\sigma_w}{2M_{S1}t_1}$

and $Hb > H_{C2} + \dfrac{\sigma_w}{2M_{S2}t_2}$

For this reason, the directions of magnetization of the two layers are almost simultaneously reversed to follow the direction of Hb. This condition corresponds to CONDITION 8 in Fig. 31.

When the irradiated portion falls outside the spot region of the laser beam in CONDITION 8, the medium temperature begins to be decreased. When the medium temperature is decreased below $T_{comp.1}$, the medium type is restored from P type to original A type. At the same time, the relationship between the strengths of TM and RE spins of the first layer is reversed, and the spin state transits from Fig. 11(2A) to Fig. 11(1A). For this reason, the direction of magnetization of the first layer is reversed, and "A-directed" ⇧ magnetization shown in Fig. 11(1B) appears. This condition corresponds to CONDITION 9 in Fig. 31.

The medium temperature is decreased from the temperature in CONDITION 9 to the room temperature.

$H_{C1}$ at the room temperature is sufficiently large, and Formula 35-4 is satisfied:

$$Hb < H_{C1} + \frac{\sigma_w}{2M_{S1}t_1} \quad \text{Formula} \quad 35\text{-}4$$

Therefore, the magnetization of the first layer is stably maintained in CONDITION 9.

Thus, a bit in the "A direction" is formed in the first layer.

[Description of Another Example of Class 7]

The principle of the overwrite operation will be described in detail below using a medium No. 7-2 belonging to a recording medium of Class 7 (P type, Quadrant III, Type 4) shown in Table 1.

This medium No. 7-2 has a relation given by Formula 41-2:

$$T_R < T_L < T_H \leq T_{C1} \leq T_{C2} \quad \text{Formula} \quad 41\text{-}2$$

For the sake of simplicity, $T_H < T_{C1} < T_{C2}$ in the following description. Fig. 28 shows this relation as a graph.

A condition for reversing only the direction of magnetization of the second layer by the initial field Hini. at the room temperature $T_R$ without reversing that of the first layer is represented by Formula 42. This medium No. 7-2 satisfies Formula 42:

$$H_{C1} > H_{C2} + \frac{\sigma_w}{2M_{S1}t_1} + \frac{\sigma_w}{2M_{S2}t_2} \quad \text{Formula} \quad 42$$

A condition for Hini. at this time is given by Formula 45. When Hini. disappears, the directions of magnetization of the first and second layers influence to each other through the interface wall energy. Conditions for maintaining the directions of magnetization of the first and second layers without reversing them are represented by Formulas 43 and 44. This medium No. 7-2 satisfies Formulas 43 and 44:

$$H_{C1} > \frac{\sigma_w}{2M_{S1}t_1} \quad \text{Formula} \quad 43$$

$$H_{C2} > \frac{\sigma_w}{2M_{S2}t_2} \quad \text{Formula} \quad 44$$

The magnetization of the second layer of the recording medium which satisfies Formulas 42 to 44 at the room temperature is aligned in, e.g., the "A direction" ⇑ by Hini. which satisfies the condition given by Formula 45 before a time immediately before recording:

$$H_{C2} + \frac{\sigma_w}{2M_{S2}t_2} < |Hini.| < H_{C1} - \frac{\sigma_w}{2M_{S1}t_1} \quad \text{Formula} \quad 45$$

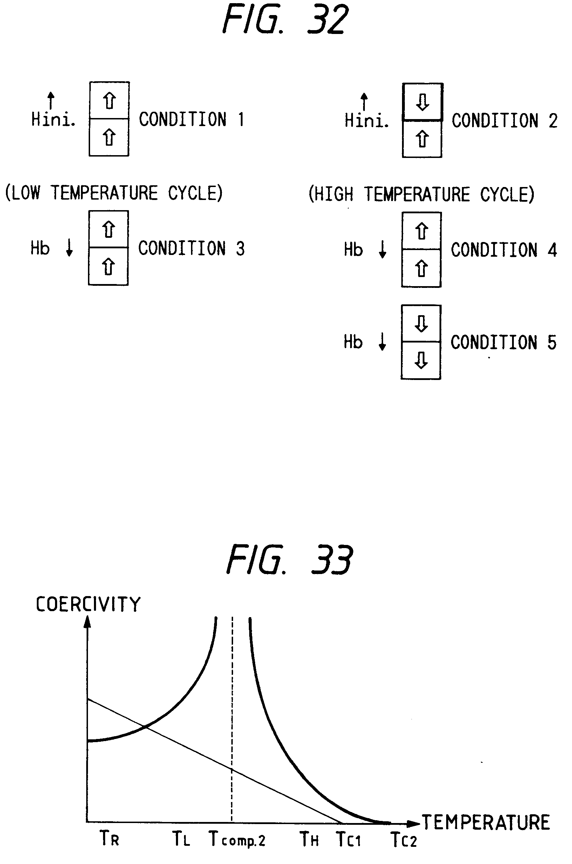

Since the medium temperature is equal to the room temperature, and is higher than $T_{comp.2}$, the TM spin is stronger than the RE spin. For this reason, the spin state of the second layer is shown in Fig. 11(4A). Since the first layer is left in the previous recorded state, the magnetization condition is represented by CONDITION 1 or 2 shown in Fig. 32. CONDITION 1 or 2 is maintained until a time immediately before recording. The bias field Hb is assumed to be applied in the "non-A direction" ↓.

When the medium has a disk shape, a condition for inhibiting magnetization of a recorded bit (in particular, a bit in CONDITION 1 in which the direction of magnetization of the first layer is opposite to the direction of Hb) from being reversed by Hb when it approaches an Hb apply means is represented by Formula 45-2:

$$Hb < H_{C1} + \frac{\sigma_w}{2M_{S1}t_1} \quad \text{Formula} \quad 45\text{-}2$$

The disk medium must satisfy this formula at the room temperature. A condition for inhibiting the initialized second layer from being reversed by Hb when it approaches the Hb apply means is represented by Formula 45-3:

$$Hb < H_{C2} - \frac{\sigma_w}{2M_{S2}t_2} \quad \text{Formula} \quad 45\text{-}3$$

In other words, conditions for determining Hb are Formulas 45-2 and 45-3.

And then, the bit in CONDITION 1 or 2 reaches the spot region of the laser beam. The laser beam intensity has two levels, i.e., high and low levels.

— Low-temperature Cycle —

A low-level laser beam is irradiated, and the medium temperature is increased to $T_{LS}$. Thus, Formulas 10-2 and 10-3 are simultaneously satisfied. As a result, CONDITION 2 in Fig. 32 transits to CONDITION 3. Meanwhile, CONDITION 1 is maintained, and becomes the same CONDITION 3.

When the irradiated portion falls outside the spot region of the laser beam in CONDITION 3, the medium temperature begins to be decreased. Since $H_{C1}$ is sufficiently large at the room temperature (see Formula 45-2), CONDITION 3 can be maintained at the room temperature.

As a result, a bit in the "A direction" ⇑ is formed in the first layer.

— High-temperature Cycle —

A high-level laser beam is irradiated- and the medium temperature is increased to the low temperature $T_{LS}$. As a result, CONDITION 4 equal to CONDITION 3 in Fig. 32 is established.

The beam irradiation continues and the medium temperature then reaches $T_H$. Since $T_H$ is closer to the Curie temperatures of the first and second layers, the medium satisfies one of the following conditions (1) to (3):

(1) $$|H_{C1} - H_{C2}| < \frac{\sigma_w}{2M_{S1}t_1} + \frac{\sigma_w}{2M_{S2}t_2}$$

and $Hb > \dfrac{M_{S1}T_1H_{C1} + M_{S2}t_2H_{C2}}{M_{S1}t_1 + M_{S2}t_2}$

(2) $$Hb > H_{C1} + \frac{\sigma_w}{2M_{S1}t_1}$$

and $Hb > H_{C2} - \dfrac{\sigma_w}{2M_{S2}t_2}$

(3) $$Hb > H_{C1} - \frac{\sigma_w}{2M_{S1}t_1}$$

and $Hb > H_{C2} + \dfrac{\sigma_w}{2M_{S2}t_2}$

For this reason, the directions of magnetization of the two layers are almost simultaneously reversed to follow the direction of ↓ Hb. This condition corresponds to CONDITION 5 in Fig. 32.

When the irradiated portion falls outside the spot region of the laser beam in CONDITION 5, the medium temperature begins to be decreased. The medium temperature is then returned to the room temperature. However, CONDITION 5 is left unchanged.

As a result, a bit in the "non-A direction" ⇓ is formed in the first layer.

[Description of Another Example of Class 8]

The principle of the overwrite operation will be described in detail below using a medium No. 8-2 belonging to a recording medium of Class 8 (A type, Quadrant IV, Type 2) shown in Table 1.

This medium No. 8-2 has a relation given by Formula 46-2:
$$T_R < T_L < T_H \lesssim T_{C1} \lesssim T_{C2} \quad \text{Formula} \quad 46\text{-}2$$
For the sake of simplicity, $T_H < T_{C1} < T_{C2}$ in the following description. $T_{comp.2}$ may be lower than, equal to, or higher than $T_L$ and $T_{C1}$. However, for the sake of simplicity, $T_L < T_{comp.2} < T_{C1}$ in the following description. Fig. 33 shows this relation as a graph.

A condition for reversing only the direction of magnetization of the second layer by the initial field Hini. at the room temperature $T_R$ without reversing that of the first layer is represented by Formula 47. This medium No. 8-2 satisfies Formula 47 at the room temperature:

$$H_{C1} > H_{C2} + \left| \frac{\sigma_w}{2M_{S1}t_1} - \frac{\sigma_w}{2M_{S2}t_2} \right| \qquad \ldots \text{Formula} \ 47$$

A condition for Hini. at this time is given by Formula 50. When Hini. disappears, the directions of magnetization of the first and second layers are influenced to each other through the interface wall energy. Conditions for maintaining the directions of magnetization of the first and second layers without reversing them are represented by Formulas 48 and 49. This medium No. 8-2 satisfies Formulas 48 and 49:

$$H_{C1} > \frac{\sigma_w}{2M_{S1}t_1} \quad \text{Formula} \quad 48$$

$$H_{C2} > \frac{\sigma_w}{2M_{S2}t_2} \quad \text{Formula} \quad 49$$

The magnetization of the second layer of the recording medium which satisfies the conditions given by Formulas 47 to 49 at the room temperature is aligned in, e.g., the "A direction" ⇑ by Hini. which satisfies the condition given by Formula 50 before a time immediately before recording:

$$H_{C2} + \frac{\sigma_w}{2M_{S2}t_2} < |Hini.| < H_{C1} + \frac{\sigma_w}{2M_{S1}t_1} \quad \text{Formula} \quad 50$$

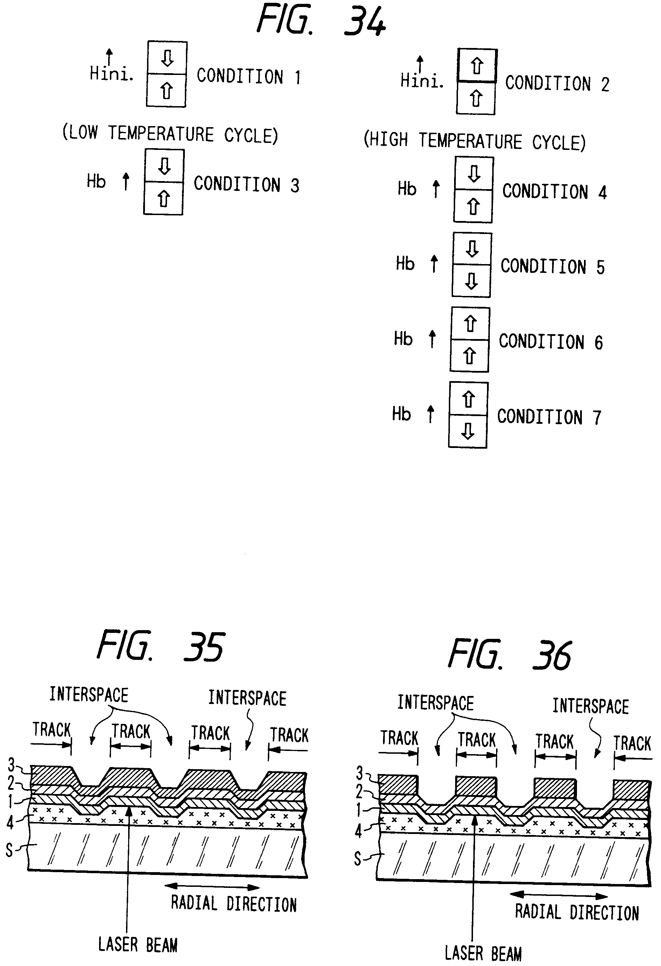

In this case, since the present medium temperature is equal to the room temperature, and is lower than $T_{comp.2}$, the spin state shown in Fig. 11(1A) is formed. The first layer is left in the previous recorded state. Therefore, the magnetization condition is represented by CONDITION 1 or 2 in Fig. 34. CONDITION 1 or 2 is maintained until a time immediately before recording. The bias field Hb is assumed to be applied in the "A direction" ↑.

When the medium has a disk shape, a condition for inhibiting magnetization of a bit recorded one revolution before (in particular, a bit in CONDITION 2 in which the direction of magnetization of the first layer is opposite to the direction of Hb) from being reversed by Hb is represented by Formula 50-2:

$$Hb < H_{C1} + \frac{\sigma_w}{2M_{S1}t_1} \quad \text{Formula} \quad 50\text{-}2$$

The disk medium must satisfy this formula at the room temperature. In other words, a condition for determining Hb is given by Formula 50-2.

And then, the bit in CONDITION 1 or 2 reaches the spot region of the laser beam. The laser beam intensity has two levels, i.e., high and low levels.

— Low-temperature Cycle —

A low-level laser beam is irradiated, and the medium temperature is increased to $T_{LS}$. Thus, Formulas 10-2 and 10-3 are simultaneously satisfied. As a result, CONDITION 2 in Fig. 34 transits to CONDITION 3. Meanwhile, CONDITION 1 in Fig. 34 is maintained, and becomes the same CONDITION 3.

When the irradiated portion falls outside the spot region of the laser beam in CONDITION 3, the medium temperature begins to be decreased. Even when the medium temperature is decreased to the room temperature, CONDITION 3 is maintained since $H_{C1}$ is sufficiently large (see Formula 50-2). As a result, a bit in the "non-A direction" ⇓ is formed in the first layer.

— High-temperature Cycle —

A high-level laser beam is irradiated, and the medium temperature is increased to the low temperature $T_{LS}$. As a result, CONDITION 4 equal to CONDITION 3 in Fig. 34 in the low-temperature cycle is established.

Upon irradiation of the high-level laser beam, the medium temperature is further increased. When the medium temperature exceeds $T_{comp.2}$, the medium type is shifted from A type to P type. The relationship between the strengths of RE spin (↑) and TM spin $(\overset{.}{\overset{.}{\downarrow}})$ of the second layer is reversed while their directions are left unchanged, and the spin state transits from Fig. 11(1A) to Fig. 11(2A). As a result, the direction of magnetization

of the second layer is reversed to the "non-A direction" ⇓ shown in Fig. 11(2B). This condition corresponds to CONDITION 5 in Fig. 34. However, since $H_{C2}$ is still large at this temperature, the magnetization ⇓ of the second layer will not be reversed by ↑ Hb.

The beam irradiation further continues, and the medium temperature is further increased up to $T_H$. Since the medium temperature is near the Curie temperatures of the first and second layers, the coercivities of the two layers are decreased. As a result, the medium satisfies one of the following conditions (1) to (3):

(1) $\quad |H_{C1} - H_{C2}| < \frac{\sigma_w}{2M_{S1}t_1} + \frac{\sigma_w}{2M_{S2}t_2}$

and $Hb > \dfrac{M_{S1}t_1H_{C1} + M_{S2}t_2H_{C2}}{M_{S1}t_1 + M_{S2}t_2}$

(2) $\quad Hb > H_{C1} + \frac{\sigma_w}{2M_{S1}t_1}$

and $Hb > H_{C2} - \dfrac{\sigma_w}{2M_{S2}t_2}$

(3) $\quad Hb > H_{C1} - \frac{\sigma_w}{2M_{S1}t_1}$

and $Hb > H_{C2} + \dfrac{\sigma_w}{2M_{S2}t_2}$

For this reason, the directions of magnetization of the two layers are almost simultaneously reversed to follow the direction of ↑ Hb. This condition corresponds to CONDITION 6 in Fig. 34.

When the irradiated portion falls outside the spot region of the laser beam in CONDITION 6, the medium temperature begins to be decreased. When the medium temperature is decreased below $T_{comp.2}$, the medium type is restored from P type to original A type. At the same time, the relationship between the strengths of RE spin (↓) and TM spin ( ⌃ ) is reversed while their directions are left unchanged, and the spin state transits from Fig. 11(4A) to Fig. 11(3A). As a result, the direction of magnetization of the second layer is reversed to the "non-A direction" ↓ shown in Fig. 11(3B). In this condition, since $H_{C2}$ has already been considerably large, the magnetization ⇓ of the second layer will not be reversed by ↑ Hb. This condition corresponds to CONDITION 7 in Fig. 34.

The medium temperature is then decreased from the temperature in CONDITION 7 to the room temperature. However, CONDITION 7 is left unchanged.

In this manner, a bit in the "A direction" ⇑ is formed in the first layer.

[Problems to be Solved by the Invention]

A conventional overwrite-capable magnetooptical recording medium undesirably has a narrow margin of low level $P_L$ of the laser beam intensity.

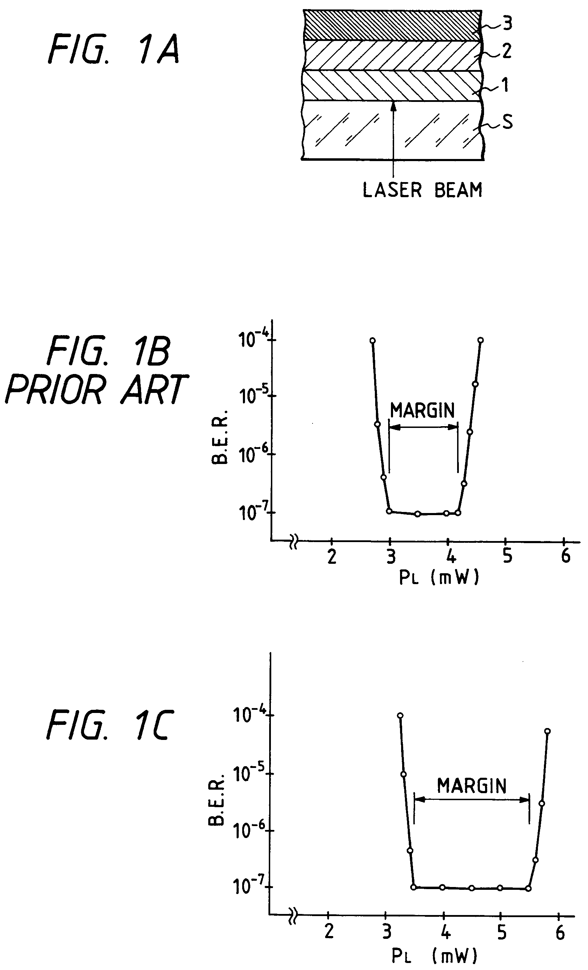

More specifically, when the level $P_L$ is set too low, a bit $B_0$ cannot be formed, and hence, the bit error rate (BER) is increased. Contrary to this, when the level $P_L$ is set too high, a high-temperature cycle occurs, a bit $B_1$ is formed, and hence, the BER is increased. Therefore, when the BER is measured while changing a beam intensity, a graph shown in Fig. 1B is obtained. A difference between a deflection point at which the BER curve abruptly rises at a lower level, and a deflection point at which the BER curve abruptly rises at a higher level will be referred to as a $P_L$ margin.

The conventional medium suffers from the narrow $P_L$ margin. For this reason, the following secondary problems are posed. (1) The setting precision of an intensity level of a semiconductor laser normally used as a light source is about ±10%, individual lasers suffer from a variation of about ±10% in the manufacture, and the setting prevision drifts by about ±10% as a time elapses. Furthermore, the setting precision drifts by about ±10% due to aging, or a change in environmental condition. (2) The intensity of a laser beam which reaches the first and second layers via an optical system drifts by about ±10% as a time elapses under the influence of dust, and the like. (3) Individual optical systems suffer from a variation of about ±10% in their manufacture, and the intensity of a laser beam which reaches the first and second layer is varied by about ±10%. (4) Due to these variations or drifts, if the $P_L$ margin is narrow, the yield of recording apparatuses is decreased, and $P_L$ falling outside the margin is undesirably radiated on a medium. As a result, information to be recorded cannot often be recorded, and the C/N ratio is impaired in a reproduction mode.

## SUMMARY OF THE INVENTION

The present inventors have made extensive studies, and fortunately found that a thermal diffusion layer, e.g., a copper (Cu) layer, was formed adjacent to a second layer directly or via an intermediate layer in an overwrite-capable magnetooptical recording medium, thereby enlarging the margin of the low level $P_L$ and high level (laser power), thus achieving the present invention.

According to the present invention, there is provided an overwrite-capable multi-layered magnetooptical recording medium, allowing enlarged margin of laser power, comprising a first layer consisting of perpendicularly magnetizable magnetic film functioning as a recording layer (which may be called "memory layer" today), a second layer consisting of perpendicularly magnetizable magnetic film functioning as a reference layer (which may be called "writing layer" today), and a thermal diffusion layer adjacent to the second layer, wherein the first layer and the second layer are exchanged-coupled, and a direction of magnetization of the second layer can be aligned in a predetermined direction without changing a direction of magnetization of the first layer.

The reason why the margin of laser power can be enlarged will be described below.

The high C/N ratio is attained by a thick mark (thick bit). Therefore, it is preferable to write the thick mark in the high-temperature cycle ($P_H$ irradiation). However, in order to erase the mark in the low-temperature cycle ($P_L$ irradiation), the level $P_L$ must be set to be relatively high. The fundamental reason for this lies in the fact that the temperature profile of the laser beam has a high central portion, and a low peripheral portion. That is, the temperature profile has a steep peak pattern (similar to a Gaussian curve). For this reason, when the laser beam is irradiated on a medium, the temperature profile of the medium also has a steep peak pattern.

When a laser beam of the level $P_L$ is irradiated, a temperature of a surrounding portion of the thick mark must become higher than the "lowest temperature $T_{LS}$ causing the low-temperature cycle". When the temperature of the surrounding portion of the mark exceeds $T_{LS}$, the central portion of the mark, i.e., the central portion of the beam has a considerably high temperature. Unfortunately, there is a possibility that the high temperature exceeds the lowest temperature $T_{HTh}$ causing the high-temperature cycle.

When a thermal diffusion layer is formed according to the present invention, the temperature profile of the medium upon $P_L$ irradiation has a moderate peak pattern. The peak is low. For this reason, a difference between the temperature of a skirt portion corresponding to the surrounding portion of the mark, and the temperature of a peak portion corresponding to the central portion of the mark is small. Therefore, a temperature difference $\Delta T$ between a temperature $T_L$ of the peak portion corresponding to the central portion of the mark, and $T_{HTh}$ becomes large. Of course, a conventional medium having no thermal diffusion layer has small $\Delta T$.

When $\Delta T$ is increased, the above-mentioned possibility that the high temperature exceeds the lowest temperature $T_{HTh}$ can be reduced. Therefore, no strictness is required upon setting of $P_L$, or strictness is moderated. More specifically, the medium of the present invention can have the enlarged $P_L$ margin due to large $\Delta T$.

In other words, since a thick mark can also be erased in the medium of the present invention, a thicker mark can be written by $P_H$. This means that no strictness is required upon setting of $P_H$, or strictness is moderated. Therefore, the medium of the present invention can have an enlarged $P_H$ margin.

Furthermore, since a thick mark can be written, a C/N ratio is increased. More specifically, when high $P_H$ is set to write a thicker mark, a higher C/N ratio can be obtained. This is also the characteristic feature of the present invention.

For a thermal diffusion layer, a material having a high thermal conductivity, e.g., Al, Ag, Au, Cu, or the like is used. The thermal diffusion layer preferably has a thickness of 20 to 500 Å, and more preferably, 50 to 300 Å. The thickness of the thermal diffusion layer need not be uniform overall. As shown in Fig. 35, the thickness of the thermal diffusion layer formed on the interspaces (not used for recording) between adjoining tracks may preferably be thinner than that on the tracks, more preferably, as shown in Fig. 36, there may be no thermal diffusion layer on the interspaces, whereby crosstalk between adjacent tracks is decreased or eliminated.

In order to avoid the second layer from being corroded, a protective layer comprising a dielectric having a thickness of 500 Å or less may be formed between the second layer and the thermal diffusion layer. As the dielectric, silicon nitride, aluminum nitride, titanium nitride, chromium nitride, silicon oxide, or the like is preferably used.

The protective layer serves a control for thermal conduction between the second layer and the thermal diffusion layer, whereby thermal diffusion rate is controlled so as to surpress an increase in recording jitter and thermal interaction owing to an extensive thermal profile.

As described above, according to the present invention, since the thermal diffusion layer is formed on the overwrite-capable magnetooptical recording medium, margins of laser beam intensities $P_L$ and $P_H$ can be enlarged. For this reason, the yield of the recording apparatus can be increased, and troubles during recording can be eliminated. In addition, a C/N ratio can be increased.

## BRIEF DESCRIPTION OF THE DRAWINGS

Fig. 1A is a schematic longitudinal sectional view of an overwrite-capable magnetooptical recording medium according to the present invention;

Fig. 1B is a graph showing a bit error rate of an overwrite-capable magnetooptical recording medium of Comparative Example (prior art), which rate is measured to obtain a margin;

Fig. 1C is a graph showing a bit error rate of an overwrite-capable magnetooptical recording medium of Example;

Fig. 2 is a schematic view for explaining the principle of recording of a magnetooptical recording method;

Fig. 3 is a schematic view for explaining the principle of reproduction of the magnetooptical recording method;

Fig. 4A is a waveform chart of a laser beam when an overwrite operation is perfored according to the basic invention;

Fig. 4B is a waveform chart of a laser beam when an overwrite operation is performed using two beams according to the basic invention;

Fig. 5 is a graph showing the relationship between a coercivity and a temperature of first and second layers of an overwrite-capable magnetooptical recording medium;

Fig. 6 is a schematic view showing directions of magnetization of the first and second layers;

Fig. 7 is an explanatory view showing changes in direction of magnetization of the first and second layers;

Figs. 8A and 8B are explanatory views respectively showing changes in direction of magnetization of the first and second layers of P- and A-type media as a result of high- and low-temperature cycles in conditions at a room temperature;

Fig. 9 is an explanatory view showing changes in direction of magnetization of the first and second layers;

Fig. 10 is an explanatory view for comparing a vector (solid arrow) representing a spin of a rare-earth (RE) atom, and a vector (dotted arrow) representing a spin of a transition-metal (TM) atom;

Figs. 11(1A) to 11(4B) are explanatory views showing the relationship between vectors representing spins, and an arrow ⇑ representing the direction of magnetization of an alloy;

Fig. 12 is a map showing types of media classified into four quadrants;

Fig. 13 is a graph showing the relationship between a coercivity and a temperature of first and second layers of a medium No. 1 of the basic invention;

Fig. 14 is an explanatory view showing changes in direction of magnetization of the first and second layers of the medium No. 1;

Fig. 15 is a graph showing the relationship between a coercivity and a temperature of first and second layers of media No. 2 and No. 8 of the basic invention;

Fig. 16 is an explanatory view showing changes in direction of magnetization of the first and second layers of the medium No. 2;

Fig. 17 is a graph showing the relationship between a coercivity and a temperature of first and second layers of media No. 3 and No. 5 of the basic invention;

Fig. 18 is an explanatory view showing changes in direction of magnetization of the first and second layers of the medium No. 3;

Fig. 19 is a graph showing the relationship between a coercivity and a temperature of first and second layers of media No. 4, No. 6, No. 7, and No. 9 of the basic invention;

Fig. 20 is an explanatory view showing changes in direction of magnetization of the first and second layers of the medium No. 4;

Fig. 21 is an explanatory view showing changes in direction of magnetization of the first and second layers of the medium No. 5;

Fig. 22 is an explanatory view showing changes in direction of magnetization of the first and second layers of the medium No. 6;

Fig. 23 is an explanatory view showing changes in direction of magnetization of the first and second layers of the medium No. 7;

Fig. 24 is an explanatory view showing changes in direction of magnetization of the first and second layers of the medium No. 8;

Fig. 25 is an explanatory view showing changes in direction of magnetization of the first and second layers of the medium No. 9;

Fig. 26 is a graph showing the relationship between a coercivity and a temperature of first and second layers of a medium No. 1-2 of the basic invention;

Fig. 27 is an explanatory view showing changes in direction of magnetization of the first and second layers of the medium No. 1-2;

Fig. 28 is a graph showing the relationship between a coercivity and a temperature of first and second layers of media No. 4-2 and No. 7-2 of the basic invention;

Fig. 29 is an explanatory view showing changes in direction of magnetization of the first and second layers of the medium No. 4-2;

Fig. 30 is a graph showing the relationship between a coercivity and a temperature of first and second layers of a medium No. 5-2 of the basic invention;

Fig. 31 is an explanatory view showing changes in direction of magnetization of the first and second layers of the medium No. 5-2;

Fig. 32 is an explanatory view showing changes in direction of magnetization of the first and second layers of the medium No. 7-2;

Fig. 33 is a graph showing the relationship between a coercivity and a temperature of first and second layers of a medium No. 8-2 of the basic invention; and

Fig. 34 is an explanatory view showing changes in direction of magnetization of the first and second layers of the medium No. 8-2.

Fig. 35 is a vertical sectional view of an overwrite-capable magnetooptical recording medium according to one embodiment of the invention.

Fig. 36 is a vertical sectional view of an overwrite-capable magnetooptical recording medium according to one embodiment of the invention.

## DETAILED DESCRIPTION OF THE PREFERRED EMBODIMENTS

The present invention will be described in detail below by way of its examples. However, the present invention is not limited to these examples.

[Example 1...Class 8]

A glass substrate having a thickness of 1.2 mm, and a diameter of 200 mm, on a surface of which a 1,000-Å thick silicon nitride (SiN) first protective layer is formed, is prepared.

A three-element RF magnetron sputtering apparatus is used, and two TbFeCo alloys having different compositions are placed as targets in the apparatus. The substrate is set in a chamber of the apparatus.

The interior of the chamber of the apparatus is temporarily evacuated to a vacuum of $7 \times 10^{-7}$ Torr. or less. Thereafter, Ar gas is introduced into the chamber to $5 \times 10^{-3}$ Torr. Sputtering is then performed at a deposition rate of about 2 Å/sec.

The first TbFeCo alloy is used as the first target, and a first layer (recording layer) comprising a $Tb_{21}Fe_{70}Co_9$ (suffixes are in units of %; the same applies to the following description) perpendicularly magnetizable magnetic film having a thickness of 600 Å is formed on the substrate.

Subsequently, the target is replaced with the second TbFeCo alloy while maintaining the vacuum state, and sputtering is performed following the same procedures as described above, thereby forming a second layer (reference layer) comprising a $Tb_{26}Fe_{52}Co_{22}$ perpendicularly magnetizable magnetic film having a thickness of 500 Å on the first layer.

A 100-Å thick SiN second protective layer is formed on the second layer by sputtering.

Furthermore, a 200-Å thick Cu thermal diffusion layer 3 is formed by sputtering.

Finally, a 800-Å thick SiN third protective layer is formed by sputtering.

In this manner, a two-layered magnetooptical recording medium No. 8 belonging to Class 8 (A type, Quadrant IV, Type 2) is manufactured. Fig. 1A illustrates this medium.

Manufacturing conditions and characteristics of this medium are summarized in Table 2 below. $M_S$, $H_C$, and $\sigma_w$ are values at 25°C.

## Table 2

| | First Layer | Second Layer |
|---|---|---|
| Composition (First Layer) | $Tb_{21}Fe_{70}Co_9$ | |
| Composition (Second Layer) | | $Tb_{26}Fe_{52}Co_{22}$ |
| Film Thickness (Å) | 600 | 500 |
| $M_S$ (emu/cc) | 65 | 150 |
| $H_C$ (Oe) | 10,000 | 4,500 |
| $T_C$ (°C) | 215 | 270 |
| $T_{comp.}$ (°C) | None | 150 |
| $\sigma_w$ | 5.0 erg/cm$^2$ | |

This medium satisfies Formula 47:

$$H_{C1} = 10,000 > H_{C2} + \left| \frac{\sigma_w}{2M_{S1}t_1} - \frac{\sigma_w}{2M_{S2}t_2} \right|$$

$$= 7,577 \; Oe$$

In Formula 50, we have:

$$H_{C2} + \frac{\sigma_w}{2M_{S2}t_2} = 7,833 \ Oe$$

$$H_{C1} + \frac{\sigma_w}{2M_{S1}t_1} = 16,410 \ Oe$$

Therefore, if the initial field Hini. is applied in, e.g., the "A direction" ↑ to have 9,000 Oe, Formula 50 can be satisfied. In this manner, the direction of magnetization of the first layer is not reversed by Hini. at the room temperature, and only the direction of magnetization of the second layer is reversed.

Furthermore, this medium satisfies Formula 48:

$$H_{C1} = 10,000 \ Oe > \frac{\sigma_w}{2M_{S1}t_1} = 6,410 \ Oe$$

and Formula 49:

$$H_{C2} = 4,500 \ Oe > \frac{\sigma_w}{2M_{S2}t_2} = 3,333 \ Oe$$

Therefore, after Hini. is removed, the directions of magnetization of the first and second layer can be held.

If the bias field Hb is applied in the same "A direction" ↑ as Hini. to have 350 Oe, Formula 50-2 is satisfied at the room temperature:

$$Hb = 350 < H_{C1} + \frac{\sigma_w}{2M_{S1}t_1} = 16,410 \ Oe$$

Therefore, "non-A-directed" ⇓ magnetization of the first layer in a recorded bit will not be reversed under the influence of ↑ Hb at the room temperature.

Furthermore, when a "non-A-directed" ⇓ bit is formed in the first layer in the low-temperature cycle, this bit is influenced by ↑ Hb at the room temperature immediately after it is formed. However, since this medium satisfies Formula 50-2 described above at the room temperature, magnetization ⇓ will not be reversed by ↑ Hb.

This medium exhibits the following values at 115°C.

$$M_{S1} = 82 \ emu/cc \qquad M_{S2} = 40 \ emu/cc$$

$$H_{C1} = 2,250 \ Oe \qquad H_{C2} = 7,000 \ Oe$$

$$\sigma_w = 2.61$$

For this reason, Formula 10-2 is satisfied:

$$H_{C1} + Hb = 2,600 < \frac{\sigma_w}{2M_{S1}t_1} = 2,652$$

Therefore, at 115°C, even if Hb is present, the direction of magnetization of the first layer is reversed by the second layer. On the other hand, Formula 10-3 is also satisfied at the same time at 115°C:

$$H_{C2} + Hb = 7,350 > \frac{\sigma_w}{2M_{S2}t_2} = 6,525$$

For this reason, the direction of magnetization of the second layer is held in the "initialized" direction.

This medium exhibits the following values at 209°C.

$$M_{S1} = 35 \ emu/cc \qquad M_{S2} = 24.5 \ emu/cc$$

$$H_{C1} = 100 \ Oe \qquad H_{C2} = 750 \ Oe$$

$$\sigma_w = 0.1$$

Therefore, the following relations (2) are satisfied:

$$Hb = 350 > H_{C1} + \frac{\sigma_w}{2M_{S1}t_1} = 338$$

36

and

$$Hb = 350 > H_{C2} - \frac{\sigma_x}{2M_{S2}t_2} = 342$$

At 209°C, the directions of magnetization of the first and second layers are reversed by Hb.

Thus, if $T_L = 115°C$ and $T_H = 209°C$, Formula 46-2 ($T_R < T_L < T_H \leqq T_{C1} \leqq T_{C2}$) is also satisfied, and an overwrite operation is enabled.

This medium also satisfies:

$$T_{comp.2} = 150°C < T_{C1} = 215°C$$

[Comparative Example]

The overwrite-capable magnetooptical recording medium No. 8 was manufactured following substantially the same procedures as in above Example 1 except that no thermal diffusion layer 3 was formed.

[Reference Example...Measurement of Margin]

Bit error rates (BERs) of the medium of above Example 1, and of the medium of Comparative Example were measured using a commercially available magnetooptical evaluation apparatus, and margins of low level $P_L$ were obtained. Fig. 1B shows the measurement result of the medium of Comparative Example, and Fig. 1C shows the measurement result of the medium of Example 1.

From these results, the margin of Comparative Example is as narrow as 4.2 - 3.0 = 1.2 mW, but the margin of Example 1 is as wide as 5.5 - 3.5 = 2.0 mW. Thus, the margin can be enlarged by about 67%.

[Example 2]

A medium was manufactured following the substantially same procedures as in Example 1 except that a thermal diffusion layer 3 was formed using Au in place of Cu.

[Example 3]

A medium was manufactured following the substantially same procedures as in Example 1 except that a thermal diffusion layer 3 was formed using Ag in place of Cu.

[Example 4]

Other example of the medium is shown in Fig. 35, wherein the medium has a photopolymer resin layer (4) or substrate(s) for forming grooves and lands. In this embodiment, recording layer (1) and reference layer (2) formed on the land constitute track, and those formed on the groove constitute interspace.

[Example 5]

Still other example of the medium which has thermal diffusion layer only on the tracks is shown in Fig. 36.

**Claims**

1. An overwrite-capable multi-layered magnetooptical recording medium, allowing enlarged margin of laser power, comprising:

   a first layer consisting of perpendicularly magnetizable magnetic film functioning as a recording layer;

   a second layer consisting of perpendicularly magnetizable magnetic film functioning as a reference layer; and

   a thermal diffusion layer adjacent to the second layer;

   wherein said first layer and said second layer are exchange-coupled, and a direction of magnetization of said second layer can be aligned in a predetermined direction without changing a direction of magnetization of said first layer.

37

2. A recording medium according to claim 1, further comprising a protective layer intervening between said second layer and said thermal diffusion layer.

3. A recording medium according to claim 2, wherein said protective layer consists of dielectric less than 500 Å thick.

4. A recording medium according to claim 1, wherein a principal component of said thermal diffusion layer is a metal selected from the group consisting of Cu, Au, Ag, and Al.

5. A recording medium according to claim 1, wherein said thermal diffusion layer is thinner on interspaces between adjoining tracks than on the tracks.

6. A recording medium according to claim 1, wherein said thermal diffusion layer is formed only on tracks.

7. A magnetic data storage medium of the type wherein binary data can be written therein by application of laser radiation at two respective non-zero power levels, within respective upper and lower power ranges, the medium comprising means for thermally diffusing an applied laser beam so as thereby to widen the lower power range.

8. A magnetic data storage medium as claimed in claim 7, wherein the thermally diffusing means comprises a thermal diffusion layer.

9. A magnetic data storage medium as claimed in claim 8, comprising two layers of magnetic material, the thermal diffusion layer being disposed in proximity to one of the layers of magnetic material.

*FIG. 1A*

LASER BEAM

*FIG. 1B*
*PRIOR ART*

*FIG. 1C*

FIG. 2

FIG. 3

# FIG. 4A

BEAM
INTENSITY

HIGH LEVEL

LOW LEVEL

VERY LOW LEVEL

ZERO LEVEL

TIME

EXAMPLE OF BINARY
CODED INFORMATION
TO BE RECORDED

1 1 1 0 0 1 1 1 1 0 0 0

# FIG. 4B

BEAM
INTENSITY

HIGH LEVEL

LOW LEVEL

BASIS LEVEL

ZERO LEVEL

LEADING
BEAM

TRAILING
BEAM

TIME

EXAMPLE OF BINARY
CODED INFORMATION
TO BE RECORDED

1 1 1 0 0 1 1 1 1 0 0 0

41

# FIG. 5

# FIG. 6

| FIRST LAYER | ⇑ ⇓ ⇓ ⇑ ⇓ ⇑ ⇓ ⇓ * |
|---|---|
| SECOND LAYER | ⇑ ⇑ ⇑ ⇑ ⇑ ⇑ ⇑ ⇑ ⇑ |

# FIG. 7

Hini. ↑  1st LAYER │ X │ CONDITION 1
         2nd LAYER │ ⇧ │

Hb ↓ │   │ CONDITION 2
     │ ⇩ │

Hb ↓ │ ⇩ │ CONDITION 3
     │ ⇩ │
     P TYPE

Hb ↓ │ ⇧ │ CONDITION 4
     │ ⇩ │
     A TYPE

Hb ↓ │   │ CONDITION 5
     │ ⇧ │

Hb ↓ │ ⇧ │ CONDITION 6
     │ ⇧ │
     P TYPE

Hb ↓ │ ⇩ │ CONDITION 7
     │ ⇧ │
     A TYPE

# FIG. 8A

P TYPE MEDIUM

CONDITION JUST
BEFORE RECORDING

CONDITION AT
ROOM TEMPERATURE

(LOW TEMPERATURE CYCLE)

CONDITION AT
ROOM TEMPERATURE

(HIGH TEMPERATURE CYCLE)

# FIG. 8B

A TYPE MEDIUM

CONDITION JUST
BEFORE RECORDING

CONDITION AT
ROOM TEMPERATURE

(LOW TEMPERATURE CYCLE)

CONDITION AT
ROOM TEMPERATURE

(HIGH TEMPERATURE CYCLE)

# FIG. 9

Hini. ↑  1st LAYER  [ X ]
      2nd LAYER  [ ⇑ ]  CONDITION 1

Hb ↓  [ ? ] [ ⇓ ]  CONDITION 2

Hb ↓  [ ⇓ ] [ ⇓ ]  CONDITION 3
    P TYPE

Hb ↓  [ ⇑ ] [ ⇓ ]  CONDITION 4
    A TYPE

Hb ↓  [ ⇑ ] [ ⇑ ]  CONDITION 5
    P TYPE

Hb ↓  [ ⇓ ] [ ⇑ ]  CONDITION 6
    P TYPE

Hb ↓  [ ⇓ ] [ ⇑ ]  CONDITION 7
    A TYPE

Hb ↓  [ ⇑ ] [ ⇑ ]  CONDITION 8
    A TYPE

Hb ↓  [ ⇑ ] [ ⇑ ]  CONDITION 9
    P TYPE

Hb ↓  [ ⇓ ] [ ⇑ ]  CONDITION 10
    A TYPE

FIG. 10

FIG. 11

(1A)　(1B)　　(2A)　(2B)

(3A)　(3B)　　(4A)　(4B)

# FIG. 12

RE RICH (1ST LAYER)

QUADRANT II | QUADRANT I

TM RICH ← | → RE RICH

(2ND LAYER)   QUADRANT III | QUADRANT IV  (2ND LAYER)

TM RICH (1ST LAYER)

# FIG. 13

COERCIVITY

TEMPERATURE

$T_R$   $T_{C1}$   $T_{C2}$
       $T_L$     $T_H$

$T_{comp.1}$   $T_{comp.2}$

# FIG. 14

Hini. ↑ | CONDITION 1

Hini. ↑ | CONDITION 2

(LOW TEMPERATURE CYCLE)

(HIGH TEMPERATURE CYCLE)

Hb ↑ | CONDITION 3

Hb ↑ | CONDITION 6

Hb ↑ | CONDITION 4

Hb ↑ | CONDITION 7

Hb ↑ | CONDITION 5

Hb ↑ | CONDITION 8

Hb ↑ | CONDITION 9

Hb ↑ | CONDITION 10

Hb ↑ | CONDITION 11

Hb ↑ | CONDITION 12

*FIG. 15*

COERCIVITY

TEMPERATURE

$T_R$      $T_{C1}$      $T_{comp.2}$      $T_{C2}$
          $T_L$                        $T_H$

*FIG. 17*

COERCIVITY

TEMPERATURE

$T_R$      $T_{comp.1}$      $T_{C1}$      $T_{C2}$
                          $T_L$          $T_H$

*FIG. 19*

COERCIVITY

TEMPERATURE

$T_R$      $T_{C1}$      $T_{C2}$
          $T_L$          $T_H$

# FIG. 16

Hini. ↑  [⇑ / ⇑]  CONDITION 1

(LOW TEMPERATURE CYCLE)

Hb ↑  [ _ / ⇑]  CONDITION 3

Hb ↑  [⇑ / ⇑]  CONDITION 4

Hini. ↑  [⇓ / ⇑]  CONDITION 2

(HIGH TEMPERATURE CYCLE)

Hb ↑  [ _ / ⇑]  CONDITION 5

Hb ↑  [ _ / ⇓]  CONDITION 6

Hb ↑  [ _ / _ ]  CONDITION 7

Hb ↑  [ _ / ⇑]  CONDITION 8

Hb ↑  [ _ / ⇓]  CONDITION 9

Hb ↑  [⇓ / ⇓]  CONDITION 10

# FIG. 18

Hini. ↑  [⇑ / ⇑]  CONDITION 1          Hini. ↑  [⇓ / ⇑]  CONDITION 2

(LOW TEMPERATURE CYCLE)              (HIGH TEMPERATURE CYCLE)

Hb ↓  [ / ⇑]  CONDITION 3            Hb ↓  [ / ⇑]  CONDITION 6

Hb ↓  [⇓ / ⇑]  CONDITION 4          Hb ↓  [ / ]  CONDITION 7

Hb ↓  [⇑ / ⇑]  CONDITION 5          Hb ↓  [ / ⇓]  CONDITION 8

                                     Hb ↓  [⇑ / ⇓]  CONDITION 9

                                     Hb ↓  [⇓ / ⇓]  CONDITION 10

# FIG. 20

Hini. ↑ | ⇩ | CONDITION 1
| ⇧ |

Hini. ↑ | ⇧ | CONDITION 2
| ⇧ |

(LOW TEMPERATURE CYCLE)

Hb ↓ | | CONDITION 3
| ⇧ |

Hb ↓ | ⇧ | CONDITION 4
| ⇧ |

(HIGH TEMPERATURE CYCLE)

Hb ↓ | | CONDITION 5
| ⇧ |

Hb ↓ | | CONDITION 6
| |

Hb ↓ | | CONDITION 7
| ⇩ |

Hb ↓ | ⇩ | CONDITION 8
| ⇩ |

# FIG. 21

Hini. ↑   [⇓/⇧]   CONDITION 1

Hini. ↑   [⇧/⇧]   CONDITION 2

(LOW TEMPERATURE CYCLE)

(HIGH TEMPERATURE CYCLE)

Hb ↓   [ /⇧]   CONDITION 3

Hb ↓   [ /⇧]   CONDITION 6

Hb ↓   [⇧/⇧]   CONDITION 4

Hb ↓   [ / ]   CONDITION 7

Hb ↓   [⇓/⇧]   CONDITION 5

Hb ↓   [ /⇓]   CONDITION 8

Hb ↓   [⇓/⇓]   CONDITION 9

Hb ↓   [⇧/⇓]   CONDITION 10

# FIG. 22

↑
Hini. | ⇩ / ⇧ | CONDITION 1

↑
Hini. | ⇧ / ⇧ | CONDITION 2

(LOW TEMPERATURE CYCLE)

(HIGH TEMPERATURE CYCLE)

Hb ↓ | / ⇧ | CONDITION 3

Hb ↓ | ⇩ / ⇧ | CONDITION 4

Hb ↓ | / ⇧ | CONDITION 5

Hb ↓ | / | CONDITION 6

Hb ↓ | / ⇩ | CONDITION 7

Hb ↓ | ⇧ / ⇩ | CONDITION 8

# FIG. 23

↑ Hini. | ⇑ / ⇑ | CONDITION 1

↑ Hini. | ⇓ / ⇑ | CONDITION 2

(LOW TEMPERATURE CYCLE)

(HIGH TEMPERATURE CYCLE)

Hb ↓ | / ⇑ | CONDITION 3

Hb ↓ | / ⇑ | CONDITION 5

Hb ↓ | ⇑ / ⇑ | CONDITION 4

Hb ↓ | / | CONDITION 6

Hb ↓ | / ⇓ | CONDITION 7

Hb ↓ | ⇓ / ⇓ | CONDITION 8

# FIG. 24

Hini. ↑ [⇩/⇧] CONDITION 1

(LOW TEMPERATURE CYCLE)

Hb ↑ [ /⇧] CONDITION 3

Hb ↑ [⇩/⇧] CONDITION 4

Hini. ↑ [⇧/⇧] CONDITION 2

(HIGH TEMPERATURE CYCLE)

Hb ↑ [ /⇧] CONDITION 5

Hb ↑ [ /⇩] CONDITION 6

Hb ↑ [ / ] CONDITION 7

Hb ↑ [ /⇧] CONDITION 8

Hb ↑ [ /⇩] CONDITION 9

Hb ↑ [⇧/⇩] CONDITION 10

# FIG. 25

Hini. ↑ | ⇩ | CONDITION 1
         | ⇧ |

Hini. ↑ | ⇧ | CONDITION 2
         | ⇧ |

(LOW TEMPERATURE CYCLE)

Hb ↓ | | CONDITION 3
      | ⇧ |

Hb ↓ | ⇩ | CONDITION 4
      | ⇧ |

(HIGH TEMPERATURE CYCLE)

Hb ↓ | | CONDITION 5
      | ⇧ |

Hb ↓ | | CONDITION 6
      | |

Hb ↓ | | CONDITION 7
      | ⇩ |

Hb ↓ | ⇧ | CONDITION 8
      | ⇩ |

## FIG. 26

COERCIVITY

TEMPERATURE

$T_R$  $T_{comp.1}$  $T_L$  $T_{comp.2}$  $T_H$  $T_{C1}$  $T_{C2}$

## FIG. 28

COERCIVITY

TEMPERATURE

$T_R$  $T_L$  $T_H$  $T_{C1}$  $T_{C2}$

# FIG. 27

(LOW TEMPERATURE CYCLE)

(HIGH TEMPERATURE CYCLE)

# FIG. 29

Hini. ↑   [⇑ / ⇑]  CONDITION 1          Hini. ↑   [⇓ / ⇑]  CONDITION 2

(LOW TEMPERATURE CYCLE)               (HIGH TEMPERATURE CYCLE)

Hb ↓   [⇑ / ⇑]  CONDITION 3          Hb ↓   [⇑ / ⇑]  CONDITION 4

                                      Hb ↓   [⇓ / ⇓]  CONDITION 5

# FIG. 30

COERCIVITY

TEMPERATURE

$T_R$   $T_{comp.1}$   $T_L$   $T_H$   $T_{C1}$   $T_{C2}$

# FIG. 31

Hini. ↑ | ⇓ / ⇑ | CONDITION 1

Hini. ↑ | ⇑ / ⇑ | CONDITION 2

Hini. ↑ | ⇑ / ⇑ | CONDITION 3

Hini. ↑ | ⇓ / ⇑ | CONDITION 4

(LOW TEMPERATURE CYCLE)

(HIGH TEMPERATURE CYCLE)

Hb ↓ | ⇑ / ⇑ | CONDITION 5

Hb ↓ | ⇑ / ⇑ | CONDITION 7

Hb ↓ | ⇓ / ⇑ | CONDITION 6

Hb ↓ | ⇓ / ⇓ | CONDITION 8

Hb ↓ | ⇑ / ⇓ | CONDITION 9

## FIG. 32

## FIG. 33

# FIG. 34

Hini. ↑ ⬚ CONDITION 1

(LOW TEMPERATURE CYCLE)

Hb ↑ ⬚ CONDITION 3

Hini. ↑ ⬚ CONDITION 2

(HIGH TEMPERATURE CYCLE)

Hb ↑ ⬚ CONDITION 4

Hb ↑ ⬚ CONDITION 5

Hb ↑ ⬚ CONDITION 6

Hb ↑ ⬚ CONDITION 7

# FIG. 35

INTERSPACE    INTERSPACE

TRACK   TRACK   TRACK   TRACK

3 2 1 4 S

RADIAL DIRECTION

LASER BEAM

# FIG. 36

INTERSPACE    INTERSPACE

TRACK   TRACK   TRACK   TRACK

3 2 1 4 S

RADIAL DIRECTION

LASER BEAM